(19) **Europäisches Patentamt**
**European Patent Office**
**Office européen des brevets**

(11) **EP 4 163 831 A1**

(12) **EUROPEAN PATENT APPLICATION**
published in accordance with Art. 153(4) EPC

(43) Date of publication:
**12.04.2023 Bulletin 2023/15**

(21) Application number: **21831965.5**

(22) Date of filing: **24.06.2021**

(51) International Patent Classification (IPC):
***G06N 3/04*** (2006.01)  ***G06N 3/08*** (2006.01)

(86) International application number:
**PCT/CN2021/102001**

(87) International publication number:
**WO 2022/001805 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2020 CN 202010615537**

(71) Applicant: **Huawei Technologies Co., Ltd.
Longgang District,
Shenzhen,
Guangdong 518129 (CN)**

(72) Inventors:
• **XU, Yixing**
  **Shenzhen, Guangdong 518129 (CN)**
• **CHEN, Xinghao**
  **Shenzhen, Guangdong 518129 (CN)**
• **WANG, Yunhe**
  **Shenzhen, Guangdong 518129 (CN)**
• **XU, Chunjing**
  **Shenzhen, Guangdong 518129 (CN)**

(74) Representative: **Maiwald GmbH
Engineering
Elisenhof
Elisenstrasse 3
80335 München (DE)**

(54) **NEURAL NETWORK DISTILLATION METHOD AND DEVICE**

(57) This application discloses a neural network distillation method, applied to the field of artificial intelligence, and includes: processing to-be-processed data by using a first neural network and a second neural network to obtain a first target output and a second target output, where the first target output is obtained by performing kernel function-based transformation on an output of the first neural network layer, and the second target output is obtained by performing kernel function-based transformation on an output of the second neural network layer; and performing knowledge distillation on the first neural network based on a target loss constructed by using the first target output and the second target output. In this application, kernel function-based transformation is performed on the output of the first neural network layer and the output of the second neural network layer. In this way, inputs and weights of the first neural network layer and the second neural network layer can be mapped to multidimensional feature space. This eliminates network performance degradation caused by different weight distribution of the neural network layers during knowledge distillation.

FIG. 5

EP 4 163 831 A1

Processed by Luminess, 75001 PARIS (FR)

## Description

This application claims priority to Chinese Patent Application No. 202010615537.4, filed with the China National Intellectual Property Administration on June 30, 2020 and entitled "NEURAL NETWORK DISTILLATION METHOD AND APPARATUS", which is incorporated herein by reference in its entirety.

## TECHNICAL FIELD

This application relates to the field of artificial intelligence, and in particular, to a neural network distillation method and apparatus.

## BACKGROUND

Artificial intelligence (AI) is a theory, a method, a technology, or an application system that simulates, extends, and expands human intelligence by using a digital computer or a machine controlled by a digital computer, to sense an environment, obtain knowledge, and obtain an optimal result based on the knowledge. In other words, the artificial intelligence is a branch of computer science, and is intended to understand the essence of intelligence and produce a new intelligent machine that can react in a manner similar to human intelligence. The artificial intelligence is to study design principles and implementation methods of various intelligent machines, so that the machines have perceiving, inference, and decision-making functions.

Knowledge distillation uses transfer learning to train another simple network by using an output of a pre-trained complex model as a supervised signal. Model distillation is to transfer promotion capability "knowledge" of a trained complex model to a network with a simple structure. Alternatively, the "knowledge" of the complex model is learned by using a simple network. During knowledge distillation, the another simple network may be trained by using the pre-trained complex network. In this way, the simple network may have a same or similar data processing capability as the complex network.

When knowledge distillation is performed, another type of network may also be trained by using a pre-trained type of network. In this way, the foregoing two types of networks may have a same or similar data processing capability. In other words, one type of network may be used as a teacher model, another type of network is used as a student model, and knowledge distillation is performed on the student model. In this way, the student model can have a same or similar data processing capability as the teacher model.

However, in some scenarios, weight distribution of a neural network layer of the student model may be different from weight distribution of a neural network layer of the teacher model. If knowledge distillation is performed on the student model by using an existing knowledge distillation method, outputs of neural network layers with different weight distribution are the same or similar in the student model and the teacher model, and performance of a model obtained after knowledge distillation is poor.

## SUMMARY

According to a first aspect, this application provides a neural network distillation method, where the method includes:

obtaining to-be-processed data, a first neural network, and a second neural network, where the first neural network includes a first neural network layer, and the second neural network includes a second neural network layer.

The first neural network may be a student network, and the second neural network may be a teacher network.

For neural network layers corresponding to the first neural network layer and the second neural network layer during subsequent knowledge distillation, in terms of functions, it is expected that when a first neural network obtained after knowledge distillation performs same data processing as the second neural network, outputs (after kernel function-based transformation) of the first neural network layer and the second neural network layer are the same or similar; and in terms of structures, locations of the first neural network layer and the second neural network layer of respective neural networks are consistent or similar. For example, when the first neural network and the second neural network include a same quantity of neural network layers, the first neural network layer of the first neural network is an $N^{th}$ layer counted starting from an input layer, and the second neural network layer of the second neural network is also an $N^{th}$ layer (or a layer near the $N^{th}$ layer) counted starting from an input layer. For example, when the first neural network and the second neural network include different quantities of neural network layers, relative locations of the first neural network layer and the second neural network layer of respective neural networks are consistent or similar. The first neural network includes A neural network layers, and the second neural network includes B neural network layers. In this case, the first neural network layer is an $A/n^{th}$ layer counted starting from an input layer, and the second neural network layer of the second neural network is a $B/n^{th}$ layer (or a layer near the $B/n^{th}$ layer) counted starting from an input layer.

The to-be-processed data is related to functions of the first neural network and the second neural network. For example, when the first neural network and the second neural network are used for image classification, the to-be-processed data may be image data.

The to-be-processed data is processed by using the first neural network and the second neural network to obtain a first target output and a second target output. The first target output is obtained by performing kernel function-based transformation on an output of the first neural network layer, and the second target output is obtained by performing kernel function-based transformation on an output of the second neural network layer. The kernel function-based transformation may be used to map an input and a weight of the neural network layer to multidimensional feature space.

Specifically, the to-be-processed data may be processed separately by using the first neural network and the second neural network. In other words, the to-be-processed data is processed by using the first neural network, and the to-be-processed data is processed by using the second neural network.

A target loss is obtained based on the first target output and the second target output.

It should be noted that, in addition to intermediate layers (the first neural network layer and the second neural network layer), an overall loss function may be obtained based on losses of last layers and classification layers of the first neural network and the second neural network, and knowledge distillation is performed on the first neural network by using the loss function to obtain an updated first neural network, where the loss function may include the target loss.

In an optional implementation, the target loss is obtained based on a mean square error, relative entropy, a JS divergence, or a wasserstein distance of the first target output and the second target output.

Provided that a distance error between the first target output and the second target output can be measured, how to obtain the target loss based on the first target output and the second target output is not limited in this application.

In an optional implementation, knowledge distillation may be performed on the first neural network based on at least the target loss and by using the second neural network as a teacher model and the first neural network as a student model to obtain the updated first neural network.

An embodiment of this application provides the neural network distillation method. Kernel function-based transformation is performed on the output of the first neural network layer and the output of the second neural network layer. In this way, inputs and weights of the first neural network layer and the second neural network layer can be mapped to the multidimensional feature space. This eliminates network performance degradation caused by different weight distribution of the neural network layers during knowledge distillation.

In an optional implementation, the first neural network layer and the second neural network layer are the intermediate layers.

The first neural network may include one input layer, a plurality of intermediate layers, and one output layer. The first neural network layer is one of the plurality of intermediate layers included in the first neural network. The second neural network may include one input layer, a plurality of intermediate layers, and one output layer. The second neural network layer is one of the plurality of intermediate layers included in the second neural network. A quantity of intermediate layers is not limited. For example, the neural network is a five-layer network, and includes one input layer, three hidden layers, and one output layer. The input layer, a first intermediate layer, a second intermediate layer, a third intermediate layer, and the output layer are sequentially connected.

In an optional implementation, the first neural network layer includes a first weight; the second neural network layer includes a second weight; and when the to-be-processed data is processed, an input of the first neural network layer is a first input, and an input of the second neural network layer is a second input. Specifically, there are hundreds or even tens of millions of parameters in the neural network. The parameters may include a weight parameter, a bias parameter, and the like of each layer of the neural network. The first weight may be that the first neural network layer includes the weight parameter, and the second weight may be that the second neural network layer includes the weight parameter. The first input is the input of the first neural network layer, and the first input may be an output of a previous neural network layer connected to the first neural network layer. The second input is the input of the second neural network layer, and the second input may be an output of a previous neural network layer connected to the second neural network layer.

The first target output indicates a distance measure between the first weight mapped to the multidimensional feature space and the first input mapped to the multidimensional feature space; and the second target output indicates a distance measure between the second weight mapped to the multidimensional feature space and the second input mapped to the multidimensional feature space.

In an optional implementation, weight distribution of the first neural network is different from weight distribution of the second neural network. In an optional implementation, the weight distribution of the first neural network is Laplacian distribution, and the weight distribution of the second neural network is Gaussian distribution.

Usually, weight distribution of the neural network is set to the Gaussian distribution, the Laplacian distribution, or the like to accelerate convergence of a training process. For example, weight distribution of a CNN is the Gaussian distribution, and weight distribution of an ANN is the Laplacian distribution.

In an optional implementation, the first neural network is the adder neural network ANN, and the second neural network is the convolutional neural network CNN.

In an optional implementation, the updated first neural network includes an updated first neural network layer, and when the second neural network and the updated first neural network process same data, a difference between an output of the updated first neural network layer and the output of the second neural network layer falls within a preset range.

In an optional implementation, that a target loss is obtained based on the first target output and the second target output includes:

> performing linear transformation on the first target output to obtain a linearly transformed first target output;
> performing linear transformation on the second target output to obtain a linearly transformed second target output; and
> obtaining the target loss based on the linearly transformed first target output and the linearly transformed second target output.

The linear transformation may be implemented by using but is not limited to a $1 \times 1$ convolutional layer. To be specific, linear transformation is performed on the first target output by using but is not limited to the $1 \times 1$ convolutional layer to obtain the linearly transformed first target output, and linear transformation is performed on the second target output by using but not limited to the $1 \times 1$ convolutional layer to obtain the linearly transformed second target output.

In an optional implementation, a kernel function includes at least one of the following: a radial basis kernel function, a Laplacian kernel function, a power index kernel function, an ANOVA kernel function, a rational quadratic kernel function, a multiquadric kernel function, an inverse multiquadric kernel function, a sigmoid kernel function, a polynomial kernel function, and a linear kernel function.

It should be noted that, in some scenarios, the inputs and the weights of the first neural network layer and the second neural network layer need to be mapped to an infinite dimension. In this case, radial basis kernel function-based transformation or Laplacian kernel function-based transformation may be selected. In some other scenarios, the inputs and the weights of the first neural network layer and the second neural network layer do not need to be mapped to an infinite dimension. In this case, one of power index kernel function-based transformation, ANOVA kernel function-based transformation, rational quadratic kernel function-based transformation, multiquadric kernel function-based transformation, inverse multiquadric kernel function-based transformation, sigmoid kernel function-based transformation, polynomial kernel function-based transformation, and linear kernel function-based transformation may be selected.

According to a second aspect, this application provides a neural network distillation method, where the method is applied to a terminal device, and the method includes:

> obtaining a first neural network and a second neural network;
> performing knowledge distillation on the first neural network by using the second neural network as a teacher model and the first neural network as a student model to obtain an updated first neural network;
> training the second neural network to obtain an updated second neural network; and
> performing knowledge distillation on the updated first neural network by using the updated second neural network as the teacher model and the updated first neural network as the student model to obtain a third neural network.

A fixed and trained teacher model is used to teach a student model in a conventional distillation method. However, this causes problems. Because the teacher model and the student model are in different training stages, distribution of the teacher model and the student model is different due to different training stages. Therefore, knowledge distillation effect is not good. Therefore, a progressive distillation method can be used to enable the teacher model and the student model to learn together. This facilitates obtaining of a good result by using the knowledge distillation method (For example, if a college teacher directly teaches primary school students college content, the primary school students cannot learn well. In a conventional related method, a plurality of teacher models are stored, and student models are taught by using different teacher models at different stages. This is equivalent to using different teachers in primary schools, secondary schools, and colleges. Herein, one teacher is used from the beginning to the end. However, the teacher knows nothing at the beginning, and obtains primary school content to college content through learning). A fixed teacher model is usually used in existing knowledge distillation. Some methods use unfixed teacher models, but the method is to store teacher models in different phases. Therefore, memory usage is considerably high. In this embodiment of this application, the teacher model and the student model are learned together. Therefore, there is always only one teacher model in the terminal device. This saves storage space.

In an optional implementation, the training the second neural network to obtain an updated second neural network includes:

iteratively training the second neural network for a plurality of times to obtain the updated second neural network.

In an optional implementation, the first neural network is an adder neural network ANN, and the second neural network is a convolutional neural network CNN.

According to a third aspect, this application provides a data processing method, where the method includes:

obtaining to-be-processed data and a first neural network, where the first neural network is obtained through knowledge distillation by using a second neural network as a teacher model, the first neural network includes a first neural network layer, and the first neural network includes a second neural network layer; and
processing the to-be-processed data by using the first neural network to obtain a processing result.

When the to-be-processed data is processed, a result of performing kernel function-based transformation on an output of the first neural network layer is a first target output, and when the second neural network processes the to-be-processed data, a result of performing kernel function-based transformation on an output of the second neural network layer is a second target output, where a difference between the first target output and the second target output falls within a preset range.
In an optional implementation, the first neural network layer and the second neural network layer are intermediate layers.
In an optional implementation, the first neural network layer includes a first weight; the second neural network layer includes a second weight; and when the to-be-processed data is processed, an input of the first neural network layer is a first input, and an input of the second neural network layer is a second input.
The first target output indicates a distance measure between the first weight mapped to multidimensional feature space and the first input mapped to the multidimensional feature space; and the second target output indicates a distance measure between the second weight mapped to the multidimensional feature space and the second input mapped to the multidimensional feature space.
In an optional implementation, weight distribution of the first neural network is different from weight distribution of the second neural network.
In an optional implementation, the weight distribution of the first neural network is Laplacian distribution, and the weight distribution of the second neural network is Gaussian distribution.
In an optional implementation, the first neural network is an adder neural network ANN, and the second neural network is a convolutional neural network CNN.
According to a fourth aspect, this application provides a neural network distillation apparatus, where the apparatus includes:

an obtaining module, configured to obtain to-be-processed data, a first neural network, and a second neural network, where the first neural network includes a first neural network layer, and the second neural network includes a second neural network layer;
a data processing module, configured to process the to-be-processed data separately by using the first neural network and the second neural network to obtain a first target output and a second target output, where the first target output is obtained by performing kernel function-based transformation on an output of the first neural network layer, and the second target output is obtained by performing kernel function-based transformation on an output of the second neural network layer, where
the obtaining module is configured to obtain a target loss based on the first target output and the second target output; and
a knowledge distillation module, configured to perform knowledge distillation on the first neural network based on at least the target loss and by using the second neural network as a teacher model and the first neural network as a student model to obtain an updated first neural network.

In an optional implementation, the first neural network layer and the second neural network layer are intermediate layers.
In an optional implementation, the target loss is obtained based on a mean square error, relative entropy, a JS divergence, or a wasserstein distance of the first target output and the second target output.
In an optional implementation, the first neural network layer includes a first weight; the second neural network layer includes a second weight; and when the to-be-processed data is processed, an input of the first neural network layer is a first input, and an input of the second neural network layer is a second input.
The first target output indicates a distance measure between the first weight mapped to multidimensional feature space and the first input mapped to the multidimensional feature space; and the second target output indicates a distance measure between the second weight mapped to the multidimensional feature space and the second input mapped to the multidimensional feature space.
In an optional implementation, weight distribution of the first neural network is different from weight distribution of the second neural network.
In an optional implementation, the weight distribution of the first neural network is Laplacian distribution, and the weight distribution of the second neural network is Gaussian distribution.
In an optional implementation, the first neural network is an adder neural network ANN, and the second neural network is a convolutional neural network CNN.

In an optional implementation, the updated first neural network includes an updated first neural network layer, and when the second neural network and the updated first neural network process same data, a difference between an output of the updated first neural network layer and the output of the second neural network layer falls within a preset range.

In an optional implementation, the obtaining module is configured to: perform linear transformation on the first target output to obtain a linearly transformed first target output,

perform linear transformation on the second target output to obtain a linearly transformed second target output, and obtain the target loss based on the linearly transformed first target output and the linearly transformed second target output.

In an optional implementation, a kernel function includes at least one of the following:
a radial basis kernel function, a Laplacian kernel function, a power index kernel function, an ANOVA kernel function, a rational quadratic kernel function, a multiquadric kernel function, an inverse multiquadric kernel function, a sigmoid kernel function, a polynomial kernel function, and a linear kernel function.

According to a fifth aspect, this application provides a neural network distillation apparatus, where the apparatus is applied to a terminal device, and the apparatus includes:

an obtaining module, configured to obtain a first neural network and a second neural network;
a knowledge distillation module, configured to perform knowledge distillation on the first neural network by using the second neural network as a teacher model and the first neural network as a student model to obtain an updated first neural network; and
a training module, configured to train the second neural network to obtain an updated second neural network, where the knowledge distillation module is configured to
perform knowledge distillation on the updated first neural network by using the updated second neural network as the teacher model and the updated first neural network as the student model to obtain a third neural network.

In an optional implementation, the training module is configured to: train the second neural network located in storage space to obtain the updated second neural network, and
delete all or a part of the second neural network from the storage space.

In an optional implementation, the training module is configured to iteratively train the second neural network for a plurality of times to obtain the updated second neural network.

In an optional implementation, the first neural network is an adder neural network ANN, and the second neural network is a convolutional neural network CNN.

According to a sixth aspect, this application provides a data processing apparatus, where the apparatus includes:

an obtaining module, configured to obtain to-be-processed data and a first neural network, where the first neural network is obtained through knowledge distillation by using a second neural network as a teacher model, the first neural network includes a first neural network layer, and the first neural network includes a second neural network layer; and
a data processing module, configured to process the to-be-processed data by using the first neural network to obtain a processing result.

When the to-be-processed data is processed, a result of performing kernel function-based transformation on an output of the first neural network layer is a first target output, and when the second neural network processes the to-be-processed data, a result of performing kernel function-based transformation on an output of the second neural network layer is a second target output, where a difference between the first target output and the second target output falls within a preset range.

In an optional implementation, the first neural network layer and the second neural network layer are intermediate layers.

In an optional implementation, the first neural network layer includes a first weight; the second neural network layer includes a second weight; and when the to-be-processed data is processed, an input of the first neural network layer is a first input, and an input of the second neural network layer is a second input.

The first target output indicates a distance measure between the first weight mapped to multidimensional feature space and the first input mapped to the multidimensional feature space; and the second target output indicates a distance measure between the second weight mapped to the multidimensional feature space and the second input mapped to the multidimensional feature space.

In an optional implementation, weight distribution of the first neural network is different from weight distribution of the second neural network.

In an optional implementation, the weight distribution of the first neural network is Laplacian distribution, and the weight distribution of the second neural network is Gaussian distribution.

In an optional implementation, the first neural network is an adder neural network ANN, and the second neural network is a convolutional neural network CNN.

According to a seventh aspect, an embodiment of this application provides a training device, and the training device may include a memory, a processor, and a bus system. The memory is configured to store a program, and the processor is configured to execute the program in the memory to perform the first aspect and any optional implementation of the first aspect.

According to an eighth aspect, an embodiment of this application provides a training device, and the training device may include a memory, a processor, and a bus system. The memory is configured to store a program, and the processor is configured to execute the program in the memory to perform the second aspect and any optional implementation of the second aspect.

According to a ninth aspect, an embodiment of this application provides an execution device, and the execution device may include a memory, a processor, and a bus system. The memory is configured to store a program, and the processor is configured to execute the program in the memory to perform the third aspect and any optional implementation of the third aspect.

According to a tenth aspect, an embodiment of this application provides a computer-readable storage medium. The computer-readable storage medium stores a computer program, and when the computer program runs on a computer, the computer is enabled to perform the first aspect and any optional implementation of the first aspect.

According to an eleventh aspect, an embodiment of this application provides a computer-readable storage medium. The computer-readable storage medium stores a computer program, and when the computer program runs on a computer, the computer is enabled to perform the second aspect and any optional implementation of the second aspect.

According to a twelfth aspect, an embodiment of this application provides a computer-readable storage medium. The computer-readable storage medium stores a computer program, and when the computer program runs on a computer, the computer is enabled to perform the third aspect and any optional implementation of the third aspect.

According to a thirteenth aspect, an embodiment of this application provides a computer program. When the computer program runs on a computer, the computer is enabled to perform the first aspect and any optional implementation of the first aspect.

According to a fourteenth aspect, an embodiment of this application provides a computer program. When the computer program runs on a computer, the computer is enabled to perform the second aspect and any optional implementation of the second aspect.

According to a fifteenth aspect, an embodiment of this application provides a computer program. When the computer program runs on a computer, the computer is enabled to perform the third aspect and any optional implementation of the third aspect.

According to a sixteenth aspect, this application provides a chip system. The chip system includes a processor, configured to support an execution device or a training device to implement a function in the foregoing aspects, for example, send or process data or information in the foregoing methods. In a possible design, the chip system further includes a memory, and the memory is configured to store program instructions and data that are necessary for the execution device or the training device. The chip system may include a chip, or may include a chip and another discrete device.

## BRIEF DESCRIPTION OF DRAWINGS

FIG. 1 is a schematic diagram of a structure of an artificial intelligence main framework;
FIG. 2 shows a system architecture according to an embodiment of this application;
FIG. 3 is a schematic diagram of a structure of a CNN;
FIG. 4 shows a hardware structure of a chip according to an embodiment of this application;
FIG. 5 is a schematic flowchart of a neural network distillation method according to an embodiment of this application;
FIG. 6 is a schematic diagram of neural network distillation according to an embodiment of this application;
FIG. 7 is a schematic flowchart of a data processing method according to an embodiment of this application;
FIG. 8 is a schematic flowchart of a neural network distillation method according to an embodiment of this application;
FIG. 9 is a schematic diagram of a neural network distillation process according to an embodiment;
FIG. 10 is a schematic diagram of a neural network distillation apparatus according to an embodiment of this application;

FIG. 11 is a schematic diagram of a neural network distillation apparatus according to an embodiment of this application;

FIG. 12 is a schematic diagram of a data processing apparatus according to an embodiment of this application;

FIG. 13 is a schematic diagram of a structure of an execution device according to an embodiment of this application;

FIG. 14 is a schematic diagram of a structure of a training device according to an embodiment of this application; and

FIG. 15 is a schematic diagram of a structure of a chip according to an embodiment of this application.

## DESCRIPTION OF EMBODIMENTS

The following describes embodiments of the this application with reference to the accompanying drawings in embodiments of the present invention. Terms used in an implementation part of the this application are intended only to explain specific embodiments of the present invention, and not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner used when objects that have a same attribute are described in embodiments of this application. In addition, terms "include", "have", and any other variations thereof are intended to cover a non-exclusive inclusion, so that a process, method, system, product, or device that includes a series of units is not limited to those units, but may include other units not expressly listed or inherent to such a process, method, product, or device.

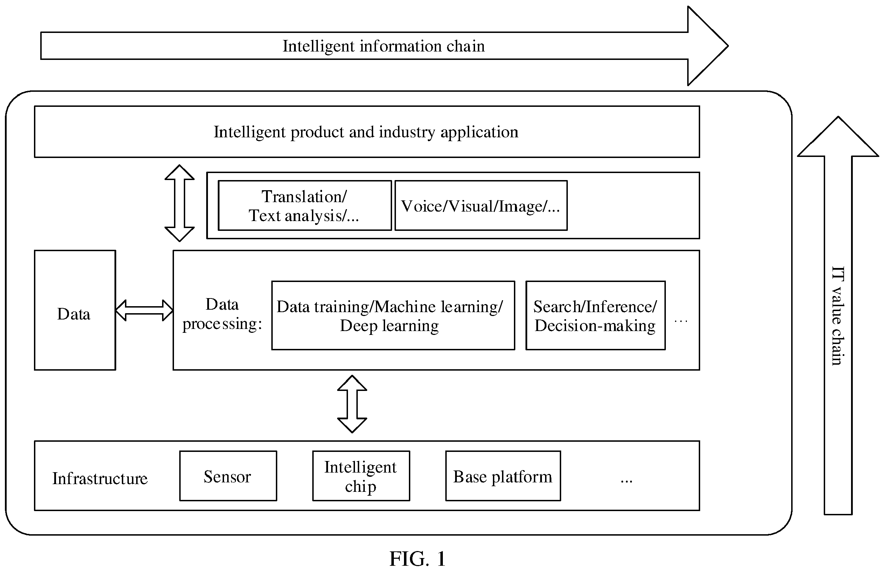

An overall working procedure of an artificial intelligence system is first described. FIG. 1 is a schematic diagram of a structure of an artificial intelligence main framework. The following describes the foregoing artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, data undergoes a condensation process of "data-information-knowledge-wisdom". The "IT value chain" reflects a value brought by artificial intelligence to the information technology industry in a process from an underlying infrastructure and information (providing and processing technology implementation) of human intelligence to a systemic industrial ecology.

(1) Infrastructure

The infrastructure provides computing capability support for the artificial intelligence system, implements communication with the external world, and implements support by using a base platform. External communication is performed by using a sensor. A computing capability is provided by an intelligent chip (a hardware acceleration chip, for example, a CPU, an NPU, a GPU, an ASIC, or an FPGA). The base platform includes related platform assurance and support such as a distributed computing framework and a network, and may include cloud storage and computing, an interconnection and interworking network, and the like. For example, the sensor communicates with the outside to obtain data, and the data is provided to an intelligent chip in a distributed computing system for computation, where the distributed computing system is provided by the base platform.

(2) Data

Data at an upper layer of the infrastructure indicates a data source in the field of artificial intelligence. The data relates to a graph, an image, a voice, and text, further relates to Internet of things data of a conventional device, and includes service data of an existing system and perception data such as force, displacement, a liquid level, a temperature, and humidity.

(3) Data processing

Data processing usually includes manners such as data training, machine learning, deep learning, searching, inference, and decision-making.

Machine learning and deep learning may mean performing symbolized and formalized intelligent information modeling, extraction, preprocessing, training, and the like on data.

Inference is a process in which a pattern of human intelligent inference is simulated in a computer or an intelligent system, and machine thinking and problem resolving are performed by using formalized information according to an inferring control policy. A typical function is searching and matching.

Decision-making is a process in which a decision is made after intelligent information is inferred, and usually provides functions such as classification, ranking, and prediction.

(4) General capabilities

After data processing mentioned above is performed on data, some general capabilities may further be formed based on a data processing result, for example, an algorithm or a general system, such as translation, text analysis, computer vision processing, speech recognition, and image recognition.

(5) Intelligent product and industry application

Intelligent products and industry applications refer to products and applications of artificial intelligence systems in various fields, and are encapsulation for an overall artificial intelligence solution, to productize intelligent information decision-making and implement applications. Application fields thereof mainly include an intelligent terminal, intelligent transportation, intelligent healthcare, autonomous driving, a smart city, and the like.

Embodiments of this application may be applied to, for example, image retrieval, album management, the smart city, human-computer interaction, and another scenario in which image classification or image recognition needs to be performed.

For example, embodiments of this application may be specifically applied to album classification and photographing recognition scenarios. The following describes the two scenarios in detail.

Album classification:

A user stores a large quantity of pictures on a mobile phone and a cloud disk. User experience can be improved by performing classification management on an album based on a category. An album arranged or stored based on a category can be obtained by classifying pictures in the album by using an image classification method in embodiments of this application. The image classification method in embodiments of this application can be used to facilitate classification management on different categories of objects by the user. In this way, user searching is facilitated, management time of the user is reduced, and album management efficiency is improved.

Specifically, when the album is classified by using the image classification method in embodiments of this application, a neural network and a feature extraction core provided in this application may be used to first extract picture features of the pictures in the album, classify the pictures in the album based on the extracted picture features to obtain classification results of the pictures, and classify the pictures in the album based on the classification results of the pictures to obtain an album that is arranged based on a picture category. When the pictures in the album are arranged based on the picture category, pictures belonging to a same category may be arranged in one row or one column. For example, in the finally obtained album, pictures in a first row are about airplanes, and pictures in a second row are about vehicles.

Object recognition through photographing:

During photographing, a user may process a taken photo by using the image classification method in embodiments of this application to automatically recognize a category of a photographed object. For example, the photographed object may be automatically recognized as a flower, an animal, or the like. Further, the image classification method in embodiments of this application may be used to recognize the photographed object to recognize the category to which the object belongs. For example, the photo taken by the user includes a shared bicycle. The image classification method in embodiments of this application may be used to recognize the shared bicycle to recognize that the object belongs to a bicycle. Further, information related to the bicycle may be further displayed.

It should be understood that the album classification and the object recognition through photographing described above are merely two specific scenarios to which the image classification method in embodiments of this application is applied. The image classification method in embodiments of this application is not limited to the foregoing two scenarios during application. The image classification method in embodiments of this application can be applied to any scenario requiring image classification or image recognition, for example, facial recognition. Alternatively, the method in embodiments of this application may be similarly applied to another field, for example, speech recognition, machine translation, and semantic segmentation.

Embodiments of this application relate to a large quantity of applications related to a neural network. To better understand the solutions of embodiments of this application, the following first describes related terms and concepts of neural networks that may be mentioned in embodiments of this application.

(1) Neural network

The neural network may include a neuron. The neuron may be an operation unit that uses $x_s$ and an intercept 1 as an input, and an output of the operation unit may be shown in a formula (1-1):

$$h_{W,b}(x) = f(W^T x) = f\left(\sum_{s=1}^{n} W_s x_s + b\right) \quad (1\text{-}1).$$

s = 1, 2, ..., or n, n is a natural number greater than 1, $W_s$ is a weight of $x_s$, and b is a bias of the neuron. f is an activation function of the neuron, used to introduce a non-linear feature into the neural network, to convert an input signal in the neuron into an output signal. The output signal of the activation function may be used as an input of a next convolutional layer, and the activation function may be a sigmoid function. The neural network is a network constituted by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Deep neural network

The deep neural network (DNN) is also referred to as a multi-layer neural network, and may be understood to be a neural network with a plurality of intermediate layers. The DNN is divided based on locations of different layers. Neural networks inside the DNN may be classified into three types: an input layer, an intermediate layer, and an output layer. Generally, the first layer is the input layer, the last layer is the output layer, and the middle layer is the intermediate layer. Layers are fully connected. To be specific, any neuron at an $i^{th}$ layer is necessarily connected to any neuron at an $(i + 1)^{th}$ layer.

Although the DNN seems complex, it is not complex in terms of work at each layer. Simply speaking, the DNN is the following linear relationship expression: $\vec{y} = \alpha(W\vec{x} + \vec{b})$, where $\vec{x}$ is an input vector, $\vec{y}$ is an output vector, $\vec{b}$ is an offset vector, $W$ is a weight matrix (also referred to as a coefficient), and $\alpha( )$ is an activation function. At each layer, only such a simple operation is performed on the input vector $\vec{x}$ to obtain the output vector $\vec{y}$. Because there are a plurality of layers in the DNN, there are also a plurality of coefficients $W$ and a plurality of offset vectors $\vec{b}$. Definitions of the parameters in the DNN are as follows: The coefficient $W$ is used as an example. It is assumed that in a DNN with three layers, a linear coefficient from the fourth neuron at the second layer to the second neuron at the third layer is defined as $W_{24}^{3}$. The superscript 3 represents a layer at which the coefficient $W$ is located, and the subscript corresponds to an output third-layer index 2 and an input second-layer index 4.

In conclusion, a coefficient from a $k^{th}$ neuron at an $(L - 1)^{th}$ layer to a $j^{th}$ neuron at an $L^{th}$ layer is defined as $W_{jk}^{L}$.

It should be noted that the input layer does not have the parameter $W$. In the deep neural network, more intermediate layers make the network more capable of describing a complex case in the real world. Theoretically, a model with more parameters has higher complexity and a larger "capacity". It indicates that the model can complete a more complex learning task. A process of training the deep neural network is a process of learning a weight matrix, and a final objective of training is to obtain weight matrices (weight matrices including vectors $W$ at a plurality of layers) of all layers in a trained deep neural network.

(3) Convolutional neural network

The convolutional neural network (CNN) is a deep neural network with a convolutional structure. The convolutional neural network includes a feature extractor including a convolutional layer and a sub-sampling layer, and the feature extractor may be considered as a filter. The convolutional layer is a neuron layer that is in the convolutional neural network and at which convolution processing is performed on an input signal. At the convolutional layer of the convolutional neural network, one neuron may be connected to only a part of neurons at a neighboring layer. A convolutional layer usually includes several feature planes, and each feature plane may include some neurons arranged in a rectangle. Neurons of a same feature plane share a weight, and the shared weight herein is a convolution kernel. Weight sharing may be understood as that an image information extraction manner is irrelevant to a location. The convolution kernel may be initialized in a form of a random-size matrix. In a process of training the convolutional neural network, the convolution kernel may obtain an appropriate weight through learning. In addition, a direct benefit brought by weight sharing is that connections between layers in the convolutional neural network are reduced and an overfitting risk is lowered.

(4) A recurrent neural network (RNN) is used for processing sequence data. A conventional neural network model starts from an input layer to an intermediate layer and then to an output layer, and the layers are fully connected, while nodes at each layer are unconnected. This common neural network resolves a plurality of problems, but is still incompetent to resolve a plurality of other problems. For example, to predict a next word in a sentence, a previous word usually needs to be used, because adjacent words in the sentence are not independent. A reason why the RNN is referred to as the recurrent neural network is that a current output of a sequence is also related to a previous output of the sequence. A specific representation form is that the network memorizes previous information and applies the previous information to calculation of the current output. To be specific, nodes at the intermediate layer are connected, and an input of the intermediate layer not only includes an output of the input layer, but also includes an output of the intermediate layer at a previous moment. Theoretically, the RNN can process sequence data of any length. Training of the RNN is the same as training of the conventional CNN or DNN.

Why is the recurrent neural network still required when the convolutional neural network is available? A reason is simple. In the convolutional neural network, there is a premise that elements are independent of each other, and an input and an output are also independent, such as a cat and a dog. However, a plurality of elements are interconnected in the real world. For example, stocks change over time. For another example, a person says: I like traveling, my favorite place is Yunnan, and I will go there in the future if there is a chance. Herein, people should know that the person will go to "Yunnan". People perform inference from the context. However, how does a machine do that? Then, the RNN emerges. The RNN is intended to make the machine capable of memorizing like a human. Therefore, an output of the RNN needs to depend on current input information and historical memorized information.

(5) Adder neural network (ANN)

The adder neural network is a type of neural network that almost does not include multiplication. Different from a convolutional neural network, the adder neural network uses an L1 distance to measure a correlation between a feature and a filter in the neural network. Because the L1 distance includes only addition and subtraction, a large quantity of multiplication operations in the neural network may be replaced with addition and subtraction. This greatly reduces calculation costs of the neural network.

In the ANN, a metric function with only addition, that is, the L1 distance, is usually used to replace convolution calculation in the convolutional neural network. An output feature can be recalculated as follows by using the L1 distance:

$$Y(m,n,t) = \sum_{i=0}^{d-1}\sum_{j=0}^{d-1}\sum_{k=1}^{C} \left| X(m+i,n+j,k) + F(i,j,k,t) \right| \qquad (1);$$

or

$$Y(m,n,t) = \sum_{i=0}^{d-1}\sum_{j=0}^{d-1}\sum_{k=1}^{C} -\left| X(m+i,n+j,k) + F(i,j,k,t) \right| \qquad (2).$$

$|(\cdot)|$ is an absolute value obtaining operation; $\Sigma(\cdot)$ is a summation operation; $Y(m, n, t)$ is at least one output feature submap; $Y(m, n, t)$ is an element in an $m^{th}$ row, an $n^{th}$ column, and a $t^{th}$ page in the output feature map; $X(m + i, n + j, k)$ is an element in an $i^{th}$ row, a $j^{th}$ column, and a $k^{th}$ page in the at least one input feature submap; $F(i, j, k, t)$ is an element in an $i^{th}$ row, a $j^{th}$ column, and a $k^{th}$ page of the feature extraction core; $t$ is a quantity of channels of the feature extraction core; $d$ is a quantity of rows of the feature extraction core; $C$ is a quantity of channels of the input feature map; and $d$, $C$, $i$, $j$, $k$, $m$, $n$, and $t$ are all integers.

It can be learned that the ANN only needs to use addition. Only addition may be used to extract a feature in the neural network by changing, to the L1 distance, a measurement indicator for calculating the feature in convolution, and the adder neural network is constructed.

(5) Loss function

In a process of training the deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers in the deep neural network). For example, if the predicted value of the network is high, the weight vector is adjusted to decrease the predicted value, and adjustment is continuously performed until the deep neural network can predict the target value that is actually expected or a value that is very close to the target value that is actually expected. Therefore, "how to obtain, through comparison, a difference between the predicted value and the target value" needs to be predefined. This is the loss function or an objective function. The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(6) Back propagation algorithm

In a training process, a neural network may correct values of parameters of an initial neural network model by using an error back propagation (BP) algorithm, so that a reconstruction error loss in the neural network model becomes increasingly smaller. Specifically, an input signal is forward transmitted until an error loss is generated in an output, and the parameter of the initial neural network model is updated through back propagation of information about the error loss, to converge the error loss. The back propagation algorithm is an error-loss-centered back propagation motion intended to obtain a parameter, such as a weight matrix, of an optimal neural network model.

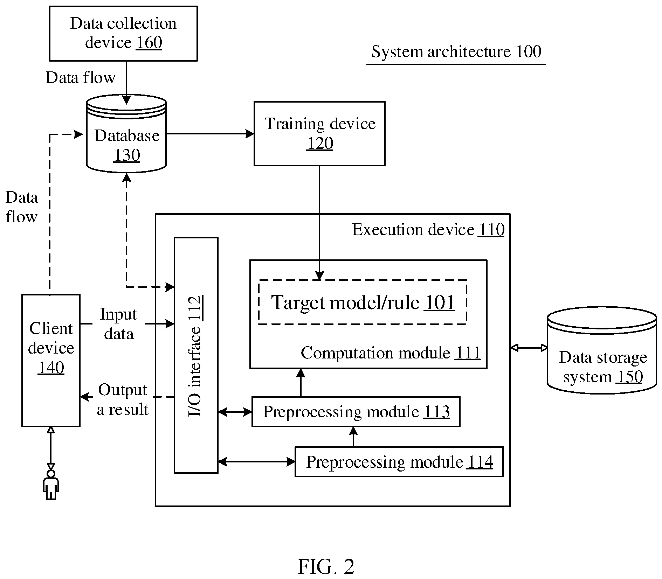

FIG. 2 shows a system architecture 100 according to an embodiment of this application. In FIG. 2, a data collection device 160 is configured to collect training data. In some optional implementations, for an image classification method, the training data may include a training image and a classification result corresponding to the training image. The classification result of the training image may be a manually pre-tagged result. Particularly, in this application, to perform knowledge distillation on a first neural network, the training data may further include a second neural network used as a teacher model, and the second neural network may be a trained model.

After collecting the training data, the data collection device 160 stores the training data in a database 130. A training device 120 obtains a target model/rule 101 through training based on the training data maintained in the database 130.

The target model/rule 101 may be the first neural network in this embodiment of this application.

The following describes the target model/rule 101 obtained by the training device 120 based on the training data. The training device 120 processes an input raw image, and compares an output image with the raw image until a difference between the image output by the training device 120 and the raw image is less than a specific threshold. In this way, training of the target model/rule 101 is completed.

The target model/rule 101 can be used to implement a data processing method in this embodiment of this application. To be specific, a processing result can be obtained by inputting to-be-processed data into the target model/rule 101 after related preprocessing. The target model/rule 101 in this embodiment of this application may specifically be a neural network. It should be noted that, in an actual application, the training data maintained in the database 130 is not necessarily all collected by the data collection device 160, and may be received by another device. It should further be noted that the training device 120 may not necessarily perform training for the target model/rule 101 completely based on the training data maintained in the database 130, or may obtain training data from a cloud or another place for model training. The foregoing description should not be construed as a limitation on embodiments of this application.

The target model/rule 101 obtained after training by the training device 120 may be applied to different systems or devices, for example, applied to an execution device 110 shown in FIG. 1. The execution device 110 may be a terminal, for example, a mobile phone terminal, a tablet computer, a notebook computer, augmented reality (AR)/virtual reality (VR), or a vehicle-mounted terminal; or may be a server, a cloud device, or the like. In FIG. 1, the execution device 110 is provided with an input/output (I/O) interface 112, configured to exchange data with an external device. A user may input data to the I/O interface 112 by using a client device 140. The input data in this embodiment of this application may include to-be-processed data input by using the client device.

A preprocessing module 113 and a preprocessing module 114 are configured to perform preprocessing based on the input data (for example, the to-be-processed data) received by the I/O interface 112. In this embodiment of this application, the preprocessing module 113 and the preprocessing module 114 may not exist (or only one of the preprocessing module 113 and the preprocessing module 114 exists), and a computation module 111 is directly configured to process the input data.

In a process in which the execution device 110 preprocesses the input data, or in a process in which the computation module 111 in the execution device 110 performs related processing such as computation, the execution device 110 may invoke data, code, and the like in a data storage system 150 for corresponding processing, and may further store, into the data storage system 150, data, instructions, and the like that are obtained through corresponding processing.

Finally, the I/O interface 112 returns the processing result to the client device 140, to provide the processing result to the user. For example, if the first neural network is used for image classification, and the processing result is a classification result, the I/O interface 112 returns the obtained classification result to the client device 140, to provide the classification result to the user.

It should be noted that the training device 120 may generate corresponding target models/rules 101 for different targets or different tasks based on different training data. The corresponding target models/rules 101 may be used to implement the foregoing targets or complete the foregoing tasks, to provide a required result for the user.

In the case shown in FIG. 1, the user may manually specify input data, and the input data may be manually specified through an interface provided by the I/O interface 112. In another case, the client device 140 may automatically send the input data to the I/O interface 112. If it is required that the client device 140 needs to obtain authorization from the user to automatically send the input data, the user may set corresponding permission on the client device 140. The user may check, on the client device 140, a result output by the execution device 110. Specifically, the result may be presented in a form of display, sound, an action, or the like. The client device 140 may also serve as a data collector to collect, as new sample data, the input data that is input to the I/O interface 112 and an output result that is output from the I/O interface 112 shown in the figure, and store the new sample data in the database 130. Certainly, the client device 140 may alternatively not perform collection. Instead, the I/O interface 112 directly stores, in the database 130 as the new sample data, the input data that is input to the I/O interface 112 and the output result that is output from the I/O interface 112 in the figure.

It should be noted that FIG. 1 is merely a schematic diagram of a system architecture according to an embodiment of this application. A location relationship between the devices, the components, the modules, and the like shown in the figure does not constitute any limitation. For example, in FIG. 1, the data storage system 150 is an external memory relative to the execution device 110, but in another case, the data storage system 150 may alternatively be disposed in the execution device 110.

As shown in FIG. 1, the target model/rule 101 is obtained through training by the training device 120. In this embodiment of this application, the target model/rule 101 may be a first neural network in this application. Specifically, the first neural network provided in this embodiment of this application may be a CNN, a deep convolutional neural network (DCNN), a recurrent neural network (RNNS), or the like.

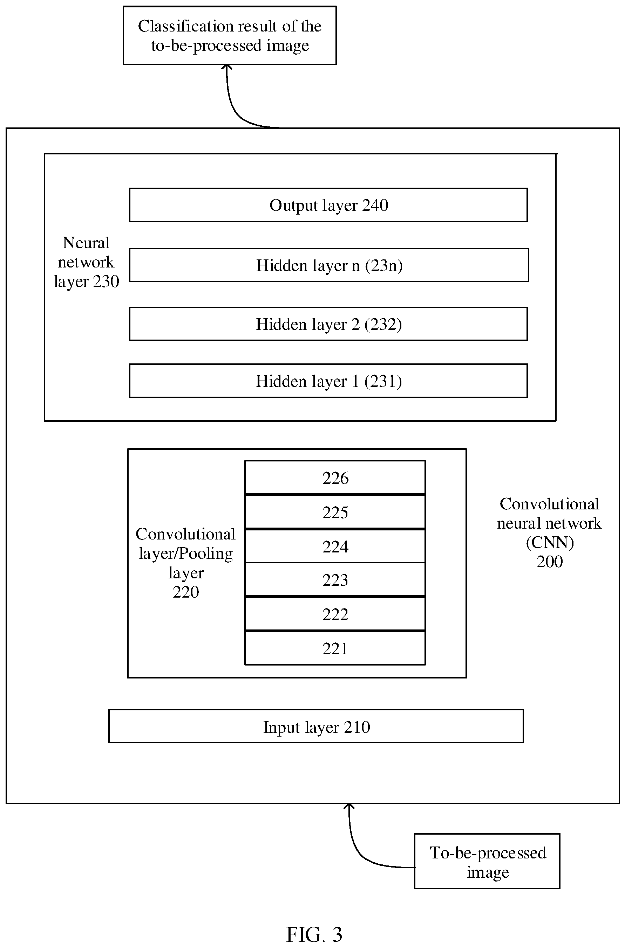

Because the CNN is a very common neural network, a structure of the CNN is described below in detail with reference to FIG. 3. As described in the foregoing description of basic concepts, the convolutional neural network is a deep neural network with a convolutional structure, and is a deep learning architecture. The deep learning architecture is to perform multi-level learning at different abstract levels by using a machine learning algorithm. As a deep learning architecture, the CNN is a feed-forward artificial neural network. Each neuron in the feed-forward artificial neural network may respond to an image input into the neural network.

As shown in FIG. 2, the convolutional neural network (CNN) 200 may include an input layer 210, a convolutional layer/pooling layer 220 (where the pooling layer is optional), and a neural network layer 230. The following describes related content of these layers in detail.

Convolutional layer/pooling layer 220:

Convolutional layer:

As shown in FIG. 2, for example, the convolutional layer/pooling layer 220 may include layers 221 to 226. For example, in an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layer 221 and the layer 222 are convolutional layers, the layer 223 is a pooling layer, the layer 224 and the layer 225 are convolutional layers, and the layer 226 is a pooling layer. In other words, an output of a convolutional layer may be used as an input of a following pooling layer, or may be used as an input of another convolutional layer, to continue to perform a convolution operation.

The following describes internal working principles of a convolutional layer by using the convolutional layer 221 as an example.

The convolutional layer 221 may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix usually processes pixels at a granularity level of one pixel (two pixels or the like, depending on a value of a stride) in a horizontal direction on an input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, convolution with a single weight matrix generates a convolution output of a single depth dimension. However, in most cases, the single weight matrix is not used, but instead, a plurality of weight matrices of a same size (rows x columns), namely, a plurality of homogeneous matrices, are used. Outputs of the weight matrices are stacked to form a depth dimension of a convolutional image. The dimension herein may be understood as being determined based on the foregoing "a plurality of". Different weight matrices may be used to extract different features from the image. For example, one weight matrix is used to extract edge information of the image, another weight matrix is used to extract a specific color of the image, and still another weight matrix is used to blur unneeded noise in the image. Sizes of the plurality of weight matrices (rows x columns) are the same. Sizes of feature maps extracted from the plurality of weight matrices with the same size are also the same, and then the plurality of extracted feature maps with the same size are combined to form an output of the convolution operation.

Weight values in these weight matrices need to be obtained through a large amount of training in an actual application. The weight matrices formed by using the weight values obtained after training may be used for extracting information from an input image, to enable the convolutional neural network 200 to perform correct prediction.

When the convolutional neural network 200 has a plurality of convolutional layers, an initial convolutional layer (for example, the layer 221) usually extracts more general features, where the general features may also be referred to as low-level features. As a depth of the convolutional neural network 200 increases, a deeper convolutional layer (for example, the layer 226) extracts more complex features, such as high-level semantic features. A feature with higher semantics is more applicable to a to-be-resolved problem.

Pooling layer/pooling layer 220:

Because a quantity of training parameters usually needs to be reduced, a pooling layer usually needs to be periodically introduced after a convolutional layer. To be specific, for the layers 221 to 226 in the layer 220 shown in FIG. 3, one convolutional layer may be followed by one pooling layer, or a plurality of convolutional layers may be followed by one or more pooling layers. During image processing, the pooling layer is only used to reduce a space size of an image. The pooling layer may include an average pooling operator and/or a maximum pooling operator, to perform sampling on an input image to obtain an image with a small size. The average pooling operator may be used to calculate pixel values in the image in a specific range, to generate an average value. The average value is used a result of average pooling. The maximum pooling operator may be used to select a pixel with a maximum value in a specific range as a maximum pooling result. In addition, similar to that the size of the weight matrix at the convolutional layer needs to be related to the size of the image, an operator at the pooling layer also needs to be related to the size of the image. A size of a processed image output from the pooling layer may be less than a size of an image input to the pooling layer. Each pixel in the image output from the pooling layer represents an average value or a maximum value of a corresponding subregion of the image input to the pooling layer.

Neural network layer 230:

After processing is performed by the convolutional layer/pooling layer 220, the convolutional neural network 200 still cannot output required output information. As described above, at the convolutional layer/pooling layer 220, only features are extracted, and parameters brought by the input image are reduced. However, to generate final output information (required class information or other related information), the convolutional neural network 200 needs to use the neural network layer 230 to generate an output of one required class or outputs of a quantity of a group of required classes. Therefore, the neural network layer 230 may include a plurality of intermediate layers (231, 232, ..., and 23n shown in FIG. 3) and an output layer 240. Parameters included in the plurality of intermediate layers may be obtained through pre-training based on related training data of a specific task type. For example, the task type may include image recognition, image classification, super-resolution image reconstruction, and the like.

A layer after the plurality of intermediate layers in the neural network layer 230, namely, a last layer of the entire convolutional neural network 200 is the output layer 240. The output layer 240 has a loss function similar to classification cross entropy, and is specifically used to calculate a predicted error. Once forward propagation (propagation in a direction from 210 to 240 shown in FIG. 3 is the forward propagation) of the entire convolutional neural network 200 is complete, back propagation (propagation in a direction from 240 to 210 shown in FIG. 3 is the back propagation) starts to update a weight value and a bias of each layer mentioned above, to reduce a loss in the convolutional neural network 200, and reduce an error between a result output by the convolutional neural network 200 by using the output layer and an ideal result.

It should be noted that the convolutional neural network 200 shown in FIG. 3 is merely used as an example of a convolutional neural network. In a specific application, the convolutional neural network may alternatively exist in a form of another network model.

In this application, a to-be-processed image may be processed by using the convolutional neural network 200 shown in FIG. 3 to obtain a classification result of the to-be-processed image. As shown in FIG. 3, after the to-be-processed image is processed by the input layer 210, the convolutional layer/pooling layer 220, and the neural network layer 230, the classification result of the to-be-processed image is output.

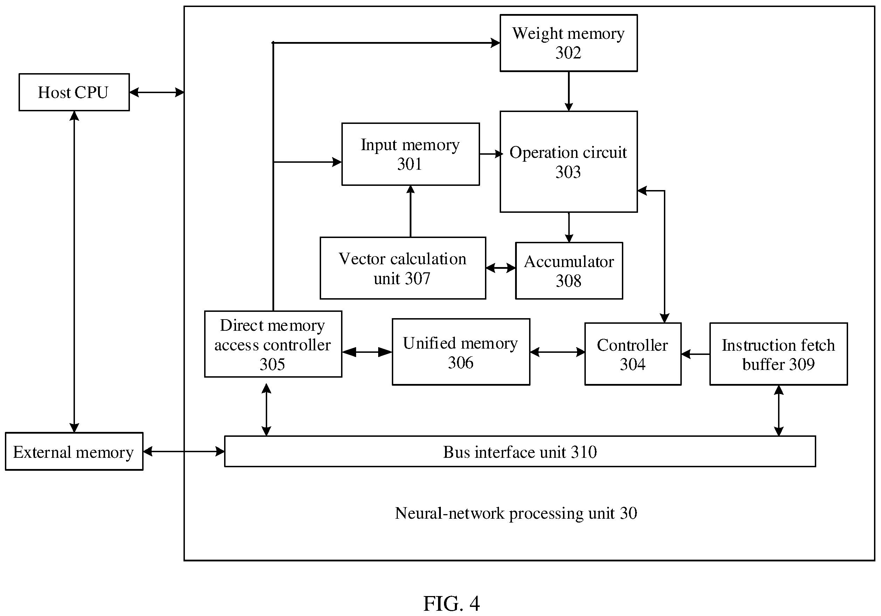

FIG. 4 shows a hardware structure of a chip according to an embodiment of this application, and the chip includes a neural-network processing unit 30. The chip may be disposed in the execution device 110 shown in FIG. 2 to complete calculation work of the computation module 111. The chip may be alternatively disposed in the training device 120 shown in FIG. 2 to complete training work of the training device 120 and output the target model/rule 101. All algorithms of the layers in the convolutional neural network shown in FIG. 3 may be implemented in the chip shown in FIG. 4.

The neural-network processing unit NPU 30 is mounted to a host CPU as a coprocessor, and the host CPU allocates a task. A core part of the NPU is an operation circuit 303. A controller 304 controls the operation circuit 303 to extract data from a memory (a weight memory or an input memory) and perform an operation.

In some implementations, the operation circuit 303 internally includes a plurality of processing units (PE). In some implementations, the operation circuit 303 is a two-dimensional systolic array. Alternatively, the operation circuit 303 may be a one-dimensional systolic array or another electronic circuit that can perform mathematical operations such as multiplication and addition. In some implementations, the operation circuit 303 is a general-purpose matrix processor.

For example, it is assumed that there is an input matrix A, a weight matrix B, and an output matrix C. The operation circuit 303 fetches, from a weight memory 302, data corresponding to the matrix B, and buffers the data in each PE of the operation circuit 303. The operation circuit 303 fetches data of the matrix A from an input memory 301 to perform a matrix operation on the matrix B, to obtain a partial result or a final result of the matrix, which is stored in an accumulator (accumulator) 308.

A vector calculation unit 307 may perform further processing such as vector multiplication, vector addition, an exponent operation, a logarithm operation, or value comparison on an output of the operation circuit 303. For example, the vector calculation unit 307 may be configured to perform network computation, such as pooling, batch normalization, or local response normalization, at a non-convolutional/non-FC layer of a neural network.

In some implementations, the vector calculation unit 307 can store a processed output vector in a unified memory 306. For example, the vector calculation unit 307 may apply a non-linear function to the output, for example, a vector of an accumulated value, of the operation circuit 303 to generate an activation value. In some implementations, the vector calculation unit 307 generates a normalized value, a combined value, or both. In some implementations, the processed output vector can be used as an activation input of the operation circuit 303, for example, to be used in a subsequent layer of the neural network.

The unified memory 306 is configured to store input data and output data.

For weight data, a direct memory access controller (DMAC) 305 is directly used to transfer input data in an external memory to the input memory 301 and/or the unified memory 306, store weight data in the external memory into the weight memory 302, and store the data in the unified memory 306 into the external memory.

A bus interface unit (BIU) 310 is configured to implement interaction between the host CPU, the DMAC, and an instruction fetch buffer 309 through a bus.

The instruction fetch buffer 309 connected to the controller 304 is configured to store instructions used by the controller 304.

The controller 304 is configured to invoke the instructions cached in the instruction fetch buffer 309, to implement a working process of controlling an operation accelerator.

Generally, the unified memory 306, the input memory 301, the weight memory 302, and the instruction fetch buffer 309 each are an on-chip memory. The external memory is a memory outside the NPU. The external memory may be a double data rate synchronous dynamic random access memory (DDR SDRAM), a high bandwidth memory (HBM), or another readable and writable memory.

The data processing method provided in this embodiment of this application may be performed on a server, or may be performed on a terminal device. The terminal device may be a mobile phone, a tablet personal computer (TPC), a media player, a smart television, a laptop computer (LC), a personal digital assistant (PDA), a personal computer (PC), a camera, a video camera, a smart watch, a wearable device (WD), or a self-driving car. This is not limited in this embodiment of this application.

During knowledge distillation, another simple network may be trained by using a pre-trained complex network. In this way, the simple network may have a same or similar data processing capability as the complex network. Knowledge distillation is to transfer "knowledge" of a trained complex network to a network with a simple structure. Compared with the complex network, the simple network may have fewer parameters. For example, a more complex CNN may be used as a teacher model, and a more complex CNN and a simpler CNN may be used as student models. Knowledge distillation is performed on the foregoing simple CNN. In this way, the simple CNN has a same or similar data processing capability as the complex CNN.

It should be noted that the foregoing same or similar data processing capability may be understood as that when same to-be-processed data is processed, processing results obtained by the student model obtained after knowledge distillation and the teacher model are the same or similar.

When knowledge distillation is performed, another type of network may also be trained by using a pre-trained type of network. In this way, the foregoing two types of networks may have a same or similar data processing capability. In other words, one type of network may be used as a teacher model, another type of network is used as a student model, and knowledge distillation is performed on the student model. In this way, the student model can have a same or similar data processing capability as the teacher model. For example, knowledge distillation may be performed on an ANN by using a CNN as the teacher model and the ANN as the student model. In this way, the ANN has a same or similar data processing capability as the CNN.

More specifically, the student model and the teacher model may be set, and a correspondence between some neural network layers of the student model and the teacher model is determined. It should be noted that the correspondence herein means that relative locations of the neural network layers of the student model and the teacher model are the same or similar. For example, if the student model and the teacher model are different types of networks, but quantities of neural network layers included in the student model and the teacher model are the same, a first neural network layer of the student model is an $N^{th}$ layer counted starting from an input layer, and a second neural network layer of the teacher model is an $N^{th}$ layer counted starting from an input layer. In this case, the first neural network layer and the second neural network layer are neural network layers having the correspondence. The neural network layers may include an intermediate layer and an output layer. During knowledge distillation, the student model and the teacher model separately process to-be-processed data. A loss function is constructed by using outputs of the neural network layers having the correspondence, and knowledge distillation is performed on the student model by using the loss function until a preset condition is met. When a student model obtained after knowledge distillation and the teacher model process same to-be-processed data, the outputs of the neural network layers having the correspondence are similar or the same. Therefore, the student model obtained after knowledge distillation can have a same or similar data processing capability as the teacher model. The first neural network layer and the second neural network layer are used as an example. When the student model obtained after knowledge distillation and the teacher model process the same to-be-processed data, the outputs of the first neural network layer and the second neural network layer are similar. Because there may be a plurality of neural network layers having the correspondence, some or all neural network layers of the student model obtained after knowledge distillation and the teacher model have the same or similar data processing capability. In this way, the student model obtained after knowledge distillation has the same or similar data processing capability as the teacher mode.

However, in some scenarios, in the student model and the teacher model, associated neural network layers have different weight distribution. If knowledge distillation is performed on the student model by using a knowledge distillation method, outputs of neural network layers with different weight distribution are the same or similar in the student model and the teacher model, which is inappropriate. For different types of networks, having the same or similar data processing capability indicates that outputs of the networks are the same or similar, but outputs of intermediate layers are not necessarily the same or similar. If knowledge distillation enables an output of an intermediate layer of the student model obtained after knowledge distillation to be the same as or similar to an output of a corresponding intermediate layer of the teacher network, from an overall perspective of the networks, the student model obtained after knowledge distillation may not have the same or similar data processing capability as the teacher network.

A specific scenario is used as an example. The CNN is the teacher model, the ANN is the student model, and knowledge distillation is performed on the ANN. Weight distribution of the ANN is Laplacian distribution, and weight distribution of the CNN is Gaussian distribution. If knowledge distillation enables an output of an intermediate layer of an ANN obtained after knowledge distillation to be the same as or similar to an output of a corresponding intermediate layer of the CNN. Therefore, from an overall perspective of the networks, the ANN obtained after knowledge distillation does not necessarily have the same or similar data processing capability as the CNN.

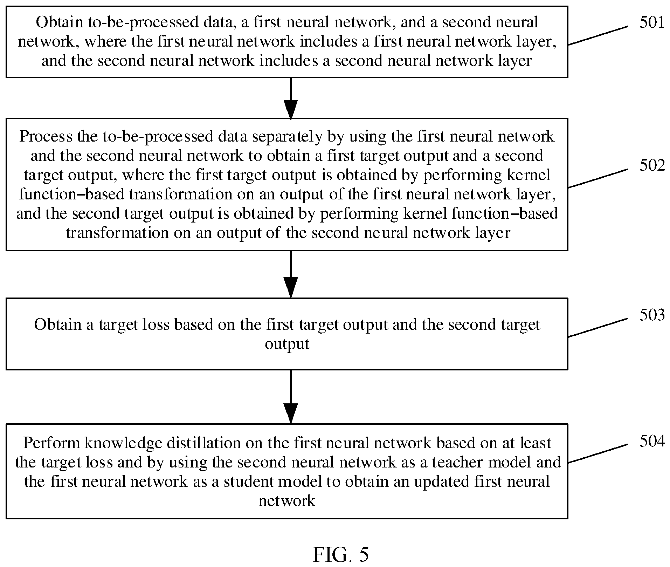

To resolve the foregoing problem, an embodiment of this application provides a neural network distillation method. FIG. 5 is a schematic flowchart of a neural network distillation method according to an embodiment of this application. As shown in FIG. 5, the neural network distillation method provided in this embodiment of this application includes the following steps.

501: Obtain to-be-processed data, a first neural network, and a second neural network, where the first neural network includes a first neural network layer, and the second neural network includes a second neural network layer.

In this embodiment of this application, the to-be-processed data, the first neural network, and the second neural network may be obtained. The first neural network is a student model, the second neural network is a teacher model, and the first neural network layer and the second neural network layer are intermediate layers. A CNN is used as an example, and the intermediate layers may be a convolutional layer, a hidden layer, and the like shown in FIG. 3. An ANN may be an intermediate layer that includes an addition or subtraction operation and that corresponds to the convolutional layer. This is not limited herein.

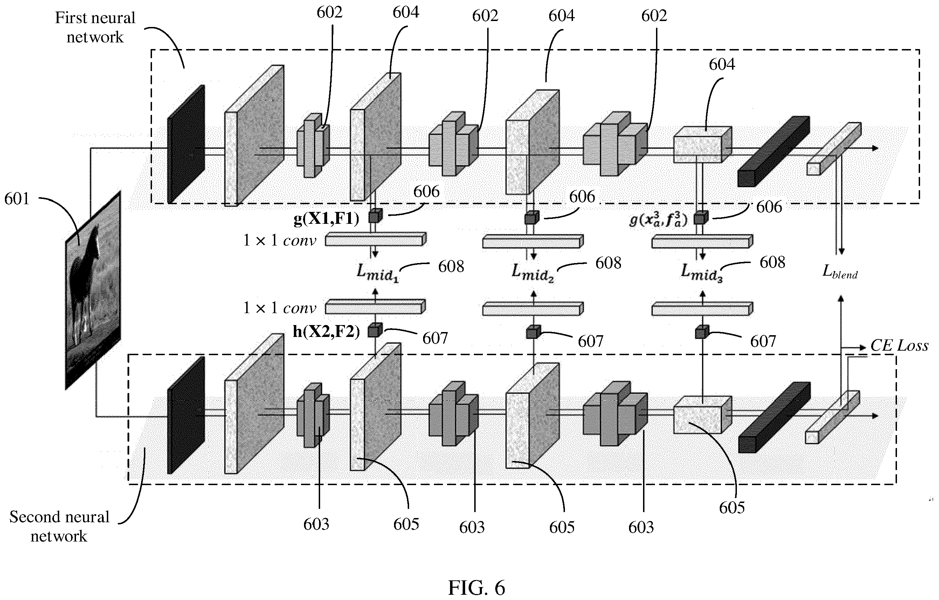

For example, the first neural network is the ANN, and the second neural network is the CNN. FIG. 6 is a schematic diagram of neural network distillation according to an embodiment of this application. As shown in FIG. 6, the first neural network may include a first neural network layer 602 (FIG. 6 shows three first neural network layers 602, and a quantity of first neural network layers is not limited in this application), and the second neural network may include a second neural network layer 603 (FIG. 6 shows three second neural network layers 603, and a quantity of second neural network layers is not limited in this application). A location of the first neural network layer in the first neural network may be consistent with or similar to a location of the second neural network layer in the second neural network.

In this embodiment of this application, weight distribution of the first neural network is different from weight distribution of the second neural network. Specifically, there are hundreds or even tens of millions of parameters in the neural network. The parameters may include a weight parameter, a bias parameter, and the like of each layer of the neural network model. Usually, weight distribution of the neural network is set to Gaussian distribution, Laplacian distribution, or the like to accelerate convergence of a training process. For example, weight distribution of the CNN is the Gaussian distribution, and weight distribution of the ANN is the Laplacian distribution.

502: Process the to-be-processed data separately by using the first neural network and the second neural network to obtain a first target output and a second target output, where the first target output is obtained by performing kernel function-based transformation on an output of the first neural network layer, and the second target output is obtained by performing kernel function-based transformation on an output of the second neural network layer.

In this embodiment of this application, after the to-be-processed data, the first neural network, and the second neural network are obtained, the to-be-processed data may be processed separately by using the first neural network and the second neural network to obtain the first target output and the second target output. The first target output is obtained by performing kernel function-based transformation on the output of the first neural network layer, and the second target output is obtained by performing kernel function-based transformation on the output of the second neural network layer.

The kernel function-based transformation includes at least one of the following: a radial basis kernel function, a Laplacian kernel function, a power index kernel function, an ANOVA kernel function, a rational quadratic kernel function, a multiquadric kernel function, an inverse multiquadric kernel function, a sigmoid kernel function, a polynomial kernel function, and a linear kernel function.

It should be noted that, in some scenarios, inputs and weights of the first neural network layer and the second neural network layer need to be mapped to an infinite dimension. In this case, radial basis kernel function-based transformation or Laplacian kernel function-based transformation may be selected. In some other scenarios, inputs and weights of the first neural network layer and the second neural network layer do not need to be mapped to an infinite dimension. In this case, one of power index kernel function-based transformation, ANOVA kernel function-based transformation, rational quadratic kernel function-based transformation, multiquadric kernel function-based transformation, inverse multiquadric kernel function-based transformation, sigmoid kernel function-based transformation, polynomial kernel function-based transformation, and linear kernel function-based transformation may be selected.

For example, the first neural network is the ANN, and the second neural network is the CNN. Refer to FIG. 6. An output of the first neural network layer is 604, and an output of the second neural network layer is 605. Kernel function-based transformation is performed on the output 604 of the first neural network layer to obtain a first target output 606, and kernel function-based transformation is performed on the output 605 of the second neural network layer to obtain a second target output 607. An objective of the kernel function-based transformation is to map the input and the weight of the neural network layer to multidimensional feature space.

Specifically, the first neural network layer includes a first weight, and the second neural network layer includes a second weight. When the to-be-processed data is processed, the input of the first neural network layer is the first input, and the input of the second neural network layer is the second input. The first target output indicates a distance measure between the first weight mapped to the multidimensional feature space and the first input mapped to the multidimensional feature space, and the second target output indicates a distance measure between the second weight mapped to the multidimensional feature space and the second input mapped to the multidimensional feature space. For example, the first input of the first neural network layer is X1, the first weight is F1, the second input of the second neural network layer is X2, and the second weight is F2. The output of the first neural network layer is X10⊙F1, and the output of the second neural network layer is X2 * F2. An operation ⊙ may be defined as:

$$X \odot F = -\sum_{i=1}^{d}\sum_{j=1}^{d}\sum_{k=1}^{c_{in}} |X(u+i, v+j, k) - F(i, j, k, c)|.$$

An operation * may be defined as:

$$X * F = \sum_{i=1}^{d}\sum_{j=1}^{d}\sum_{k=1}^{c_{in}} X(u+i, v+j, k) \times F(i, j, k, c).$$

Then, Laplacian kernel function-based transformation and Gaussian kernel function-based transformation may be separately performed on the outputs of the ANN and the CNN:

$$g(X1, F1) = e^{-\frac{X1 \odot F1}{\sigma}};$$

and

$$h(X2, F2) = e^{-\frac{X2 * F2}{2\sigma^2}}.$$

g(X1, F1) may indicate the first target output, and h(X2, F2) may indicate the second target output.

Optionally, linear transformation may be further separately performed on the first target output and the second target output. To be specific, linear transformation is performed on the first target output to obtain a linearly transformed first target output, and linear transformation is performed on the second target output to obtain a linearly transformed second target output. A target loss is obtained based on the linearly transformed first target output and the linearly transformed second target output. The foregoing linear transformation process may be implemented by using but is not limited to a 1 x 1 convolutional layer.

503: The target loss is obtained based on the first target output and the second target output.

In this embodiment of this application, after the to-be-processed data is processed separately by using the first neural network and the second neural network to obtain the first target output and the second target output, the target loss may be obtained based on the first target output and the second target output.

In an implementation, the target loss is obtained based on a mean square error, relative entropy, a JS divergence, or a wasserstein distance of the first target output and the second target output. It should be noted that, provided that a distance error between the first target output and the second target output can be measured, how to obtain the target loss based on the first target output and the second target output is not limited in this application.

504: Perform knowledge distillation on the first neural network based on at least the target loss and by using the second neural network as the teacher model and the first neural network as the student model to obtain an updated first neural network.

In this embodiment of this application, after the target loss is obtained, knowledge distillation may be performed on the first neural network based on at least the target loss and by using the second neural network as the teacher model and the first neural network as the student model to obtain the updated first neural network.

It should be noted that, in addition to the intermediate layers (the first neural network layer and the second neural network layer), an overall loss function may be obtained based on losses of last layers and classification layers of the first neural network and the second neural network, and knowledge distillation is performed on the first neural network by using the loss function to obtain the updated first neural network, where the loss function may include the target loss.

In this embodiment of this application, the updated first neural network includes an updated first neural network layer, and when the second neural network and the updated first neural network process same data, a difference between an output of the updated first neural network layer and the output of the second neural network layer falls within a preset range.

In this embodiment of this application, target data may be further obtained, and the target data is processed based on the updated first neural network to obtain a processing result. The target data may be image data, audio data, video data, or the like. Processing performed by the updated first neural network on the target data may include but is not limited to image classification, speech recognition, image recognition, and the like. This is not limited herein.

This embodiment of this application provides the neural network distillation method, where the method includes: obtaining the to-be-processed data, the first neural network, and the second neural network, where the first neural network includes the first neural network layer, and the second neural network includes the second neural network layer; processing the to-be-processed data by using the first neural network and the second neural network to obtain the first target output and the second target output, where the first target output is obtained by performing kernel function-based transformation on the output of the first neural network layer, and the second target output is obtained by performing kernel function-based transformation on the output of the second neural network layer; obtaining the target loss based on the first target output and the second target output; and performing knowledge distillation on the first neural network based on at least the target loss and by using the second neural network as the teacher model and the first neural network as the student model to obtain the updated first neural network. In the foregoing manner, kernel function-based transformation is performed on the output of the first neural network layer and the output of the second neural network layer. In this way, the inputs and the weights of the first neural network layer and the second neural network layer can be mapped to the multidimensional feature space. This eliminates impact caused by different weight distribution of the neural network layers.

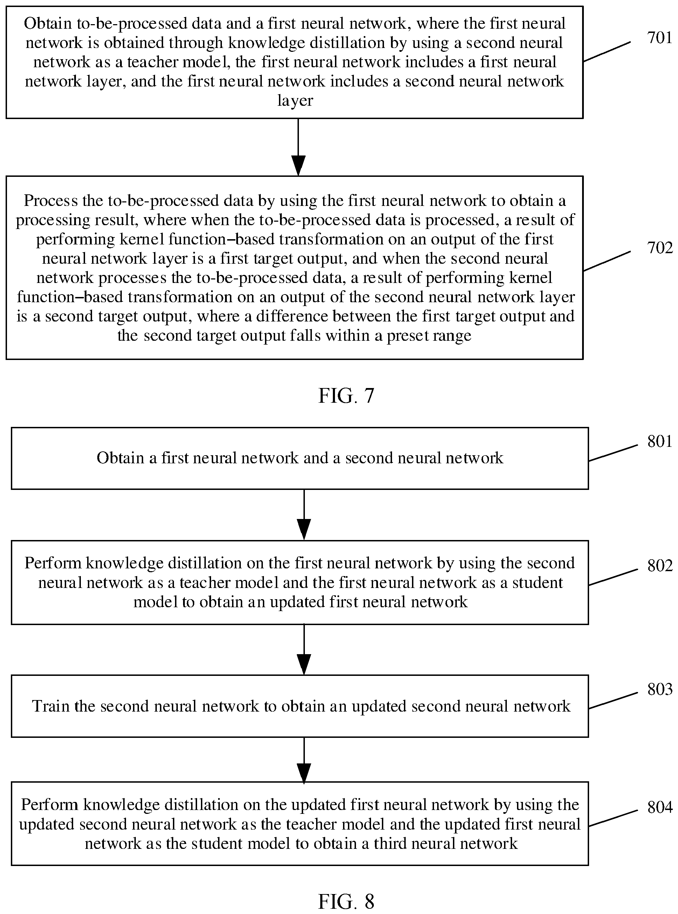

FIG. 7 is a schematic flowchart of a data processing method according to an embodiment of this application. As shown in FIG. 7, the data processing method provided in this embodiment of this application includes the following steps.

701: Obtain to-be-processed data and a first neural network, where the first neural network is obtained through knowledge distillation by using a second neural network as a teacher model, the first neural network includes a first neural network layer, and the first neural network includes a second neural network layer.

In this embodiment of this application, the to-be-processed data and the first neural network may be obtained. The first neural network is obtained through knowledge distillation by using the second neural network as the teacher model, the first neural network includes the first neural network layer, and the first neural network includes the second neural network layer. For details about how to use the second neural network as the teacher model to obtain the first neural network through knowledge distillation, refer to the description of how to obtain the updated first neural network in the embodiment corresponding to FIG. 5. Details are not described herein again.

702: Process the to-be-processed data by using the first neural network to obtain a processing result, where when the to-be-processed data is processed, a result of performing kernel function-based transformation on an output of the first neural network layer is a first target output, and when the second neural network processes the to-be-processed data, a result of performing kernel function-based transformation on an output of the second neural network layer is a second target output, where a difference between the first target output and the second target output falls within a preset range, and the kernel function-based transformation is used to map an input of the neural network layer and a weight of the neural network layer to multidimensional feature space.

This embodiment of this application provides the data processing method, where the method includes: obtaining the to-be-processed data and the first neural network, where the first neural network is obtained through knowledge distillation by using the second neural network as the teacher model, the first neural network includes the first neural network layer, and the first neural network includes the second neural network layer; and processing the to-be-processed data by using the first neural network to obtain the processing result. When the to-be-processed data is processed, the result of performing kernel function-based transformation on the output of the first neural network layer is the first target output, and when the second neural network processes the to-be-processed data, the result of performing kernel function-based transformation on the output of the second neural network layer is the second target output, where the difference between the first target output and the second target output falls within the preset range. In the foregoing manner, kernel function-based transformation is performed on the output of the first neural network layer and the output of the second neural network layer. In this way, inputs and weights of the first neural network layer and the second neural network layer can be mapped to the multidimensional feature space. This eliminates impact caused by different weight distribution of the neural network layers.

In an optional implementation, the first neural network layer and the second neural network layer are intermediate layers.

In an optional implementation, the first neural network layer includes a first weight; the second neural network layer includes a second weight; and when the to-be-processed data is processed, the input of the first neural network layer is a first input, and the input of the second neural network layer is a second input.

The first target output indicates a distance measure between the first weight mapped to the multidimensional feature space and the first input mapped to the multidimensional feature space; and the second target output indicates a distance measure between the second weight mapped to the multidimensional feature space and the second input mapped to the multidimensional feature space.

In an optional implementation, weight distribution of the first neural network is different from weight distribution of the second neural network.

In an optional implementation, the weight distribution of the first neural network is Laplacian distribution, and the weight distribution of the second neural network is Gaussian distribution.

In an optional implementation, the first neural network is an adder neural network ANN, and the second neural network is a convolutional neural network CNN.

FIG. 8 is a schematic flowchart of a neural network distillation method according to an embodiment of this application, where the method may be applied to a terminal device. The neural network distillation method provided in this embodiment of this application includes the following steps.

**EP 4 163 831 A1**

801: Obtain a first neural network and a second neural network.

In this embodiment of this application, the terminal device may obtain the first neural network and the second neural network, where the first neural network is a student model, and the second neural network is a teacher model.

802: Perform knowledge distillation on the first neural network by using the second neural network as the teacher model and the first neural network as the student model to obtain an updated first neural network.

803: Train the second neural network to obtain an updated second neural network.

A fixed and trained teacher model is used to teach a student model in a conventional distillation method. However, this causes problems. Because the teacher model and the student model are in different training stages, distribution of the teacher model and the student model is different due to different training stages. Therefore, knowledge distillation effect is not good. Therefore, a progressive distillation method can be used to enable the teacher model and the student model to learn together. This facilitates obtaining of a good result by using the knowledge distillation method (For example, if a college teacher directly teaches primary school students college content, the primary school students cannot learn well. In a conventional related method, a plurality of teacher models are stored, and student models are taught by using different teacher models at different stages. This is equivalent to using different teachers in primary schools, secondary schools, and colleges. Herein, one teacher is used from the beginning to the end. However, the teacher knows nothing at the beginning, and obtains primary school content to college content through learning).

A fixed teacher model is usually used in existing knowledge distillation. Some methods use unfixed teacher models, but the method is to store teacher models in different phases. Therefore, memory usage is considerably high. In this embodiment of this application, the teacher model and the student model are learned together. Therefore, there is always only one teacher model in the terminal device. This saves storage space.

In an implementation, the second neural network is iteratively trained for a plurality of times to obtain the updated second neural network.

804: Perform knowledge distillation on the updated first neural network by using the updated second neural network as the teacher model and the updated first neural network as the student model to obtain a third neural network.

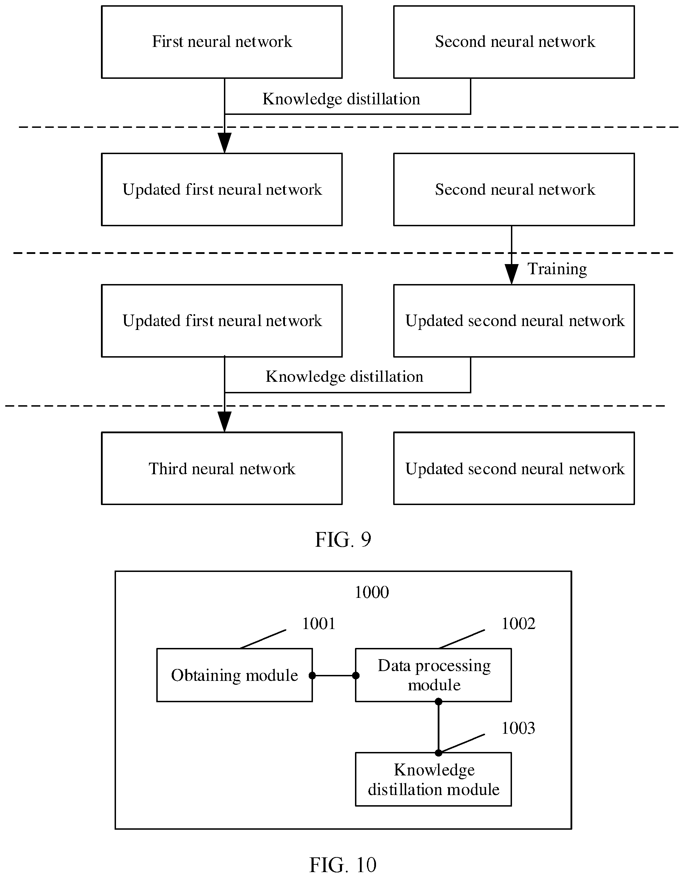

FIG. 9 is a schematic diagram of a neural network distillation process according to an embodiment. As shown in FIG. 9, knowledge distillation is performed on the first neural network by using the second neural network as the teacher model and the first neural network as the student model to obtain the updated first neural network. In this case, the terminal device stores the updated first neural network and the second neural network. The second neural network may be trained to obtain the updated second neural network. In this case, the terminal device stores the updated first neural network and the updated second neural network. Knowledge distillation may be performed on the updated first neural network by using the updated second neural network as the teacher model and the updated first neural network as the student model to obtain the third neural network. In this case, the terminal device stores the third neural network and the updated second neural network. It can be learned that at a same moment, when knowledge distillation is performed on the first neural network, the terminal device stores only one teacher model (the second neural network or the updated second neural network).

The following describes performance advantages of the network obtained based on this embodiment of this application. Experiments are performed on CIFAR-10, CIFAR-100, and ImageNet classification datasets, and the following results (Table 1 and Table 2) may be obtained.

**Table 1**

| Model | Method | #Mul. I | #Add. | XNOR I | CIFAR-10 | CIFAR-100 |
|---|---|---|---|---|---|---|
| VGG-small | CNN | 0.65G | 0.65G | 0 | 94.25% | 75.96% |
| | BNN | 0 | 0.65G | 0.65G | 89.80% | 67.24% |
| | ANN | 0 | 1.30G | 0 | 93.72% | 74.58% |
| | MMD ANN [8] | 0 | 1.300 | 0 | 93.97% | 75.14% |
| | PKKD ANN | 0 | 1.30G | 0 | **95.03%** | **76.94%** |
| ResNet-20 | CNN | 41.17M | 41.17M | 0 | 92.93% | 68.75% |
| | BNN | () | 41.17M | 41.17M | 84.87% | 54.14% |
| | ANN | 0 | 82.34M | 0 | 92.02% | 67.60% |
| | MMD ANN [8] | 0 | 82.34M | 0 | 92.30% | 68.07% |
| | PKKD ANN | 0 | 82.34M | 0 | **92.96%** | **69.93%** |

(continued)

| Model | Method | #Mul. I | #Add. | XNOR I | CIFAR-10 | CIFAR-100 |
|---|---|---|---|---|---|---|
| ResNet-32 | CNN | 69.12M | 69.12M | 0 | 93.59% | 70.46% |
| | BNN | () | 69.12M | 69.12M | 86.74% | 56.21% |
| | ANN | 0 | 138.24M | 0 | 93.01% | 69.17% |
| | MMD ANN [8] | 0 | 138.24M | 0 | 93.16% | 69.89% |
| | PKKD ANN | 0 | 138.24M | 0 | **93.62%** | **72.41%** |

**Table 2**

| Model | Method | #Mul. | #Add. | XNOR | Top-1 Acc | Top-5 Acc |
|---|---|---|---|---|---|---|
| ResNet-18 | CNN | 1.8G | 1.8G | 0 | 69.8% | 89.1% |
| | BNN | 0 | 1.8G | 1.8G | 51.2% | 73.2% |
| | ANN | 0 | 3.60 | 0 | 67.0% | 87.6% |
| | MMD ANN [8] | 0 | 3.60 | 0 | 67.9% | 88.0% |
| | PKKD ANN | 0 | 3.60 | 0 | **68.8%** | **88.6%** |
| ResNet-50 | CNN | 3.9G | 3.9G | 0 | 76.2% | 92.9% |
| | BNN | 0 | 3.9G | 3.9G | 55.8% | 78.4% |
| | ANN | 0 | 7.7G | 0 | 74.9% | 91.7% |
| | MMD ANN [8] | 0 | 7.7G | 0 | 75.5% | 92.2% |
| | PKKD ANN | 0 | 7.70 | 0 | **76.8%** | **93.3%** |

Compared with other networks, a progressive kernel based knowledge distillation (progressive kernel based knowledge distillation, PKKD) method has an obvious advantage in classification precision (Top-1 Acc and Top-5 Acc). Top-1 Acc refers to accuracy that a category ranked first matches an actual result. Top-5 Acc refers to accuracy that categories ranked top 5 include actual results. #Add indicates a quantity of addition operations. #XNOR indicates a quantity of XNOR operations.

FIG. 10 is a schematic diagram of a neural network distillation apparatus according to an embodiment of this application. As shown in FIG. 10, the neural network distillation apparatus 1000 provided in this application includes:

an obtaining module 1001, configured to obtain to-be-processed data, a first neural network, and a second neural network, where the first neural network includes a first neural network layer, and the second neural network includes a second neural network layer;

a data processing module 1002, configured to process the to-be-processed data by using the first neural network and the second neural network to obtain a first target output and a second target output, where the first target output is obtained by performing kernel function-based transformation on an output of the first neural network layer, and the second target output is obtained by performing kernel function-based transformation on an output of the second neural network layer, where

the obtaining module 1001 is further configured to obtain a target loss based on the first target output and the second target output; and

a knowledge distillation module 1003, configured to perform knowledge distillation on the first neural network based on at least the target loss and by using the second neural network as a teacher model and the first neural network as a student model to obtain an updated first neural network.

In an optional implementation, the data processing module is further configured to: obtain target data, and process the target data based on the updated first neural network to obtain a processing result.

In an optional implementation, the first neural network layer and the second neural network layer are intermediate layers.

In an optional implementation, the target loss is obtained based on a mean square error, relative entropy, a JS divergence, or a wasserstein distance of the first target output and the second target output.

In an optional implementation, the first neural network layer includes a first weight; the second neural network layer includes a second weight; and when the to-be-processed data is processed, an input of the first neural network layer is a first input, and an input of the second neural network layer is a second input.

The first target output indicates a distance measure between the first weight mapped to multidimensional feature space and the first input mapped to the multidimensional feature space; and the second target output indicates a distance measure between the second weight mapped to the multidimensional feature space and the second input mapped to the multidimensional feature space.

In an optional implementation, weight distribution of the first neural network is different from weight distribution of the second neural network.

In an optional implementation, the weight distribution of the first neural network is Laplacian distribution, and the weight distribution of the second neural network is Gaussian distribution.

In an optional implementation, the first neural network is an adder neural network ANN, and the second neural network is a convolutional neural network CNN.

In an optional implementation, the updated first neural network includes an updated first neural network layer, and when the second neural network and the updated first neural network process same data, a difference between an output of the updated first neural network layer and the output of the second neural network layer falls within a preset range.

In an optional implementation, the obtaining module is configured to: perform linear transformation on the first target output to obtain a linearly transformed first target output,

perform linear transformation on the second target output to obtain a linearly transformed second target output, and obtain the target loss based on the linearly transformed first target output and the linearly transformed second target output.

In an optional implementation, a kernel function includes at least one of the following:
a radial basis kernel function, a Laplacian kernel function, a power index kernel function, an ANOVA kernel function, a rational quadratic kernel function, a multiquadric kernel function, an inverse multiquadric kernel function, a sigmoid kernel function, a polynomial kernel function, and a linear kernel function.

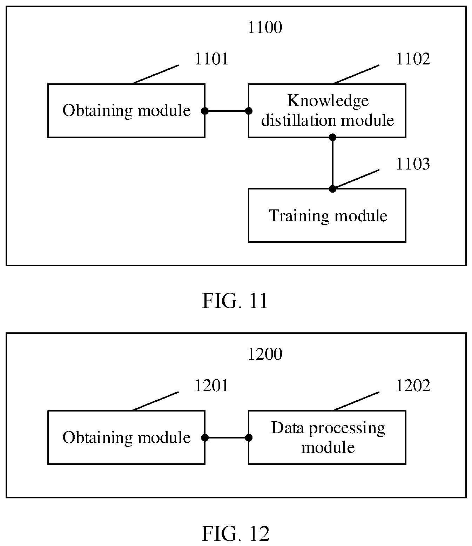

FIG. 11 is a schematic diagram of a neural network distillation apparatus according to an embodiment of this application. As shown in FIG. 11, the neural network distillation apparatus 1100 provided in this application includes:

an obtaining module 1101, configured to obtain a first neural network and a second neural network;
a knowledge distillation module 1102, configured to perform knowledge distillation on the first neural network by using the second neural network as a teacher model and the first neural network as a student model to obtain an updated first neural network; and
a training module 1103, configured to train the second neural network to obtain an updated second neural network, where
the knowledge distillation module 1102 is configured to perform knowledge distillation on the updated first neural network by using the updated second neural network as the teacher model and the updated first neural network as the student model to obtain a third neural network.

In an optional implementation, the training module is configured to: train the second neural network located in storage space to obtain the updated second neural network, and
delete all or a part of the second neural network from the storage space.

In an optional implementation, the training module is configured to iteratively train the second neural network for a plurality of times to obtain the updated second neural network.

FIG. 12 is a schematic diagram of a data processing apparatus according to an embodiment of this application. As shown in FIG. 12, the data processing apparatus 1200 provided in this application includes:

an obtaining module 1201, configured to obtain to-be-processed data and a first neural network, where the first neural network is obtained through knowledge distillation by using a second neural network as a teacher model, the first neural network includes a first neural network layer, and the first neural network includes a second neural network layer; and
a data processing module 1202, configured to process the to-be-processed data by using the first neural network to obtain a processing result.

When the to-be-processed data is processed, a result of performing kernel function-based transformation on an output of the first neural network layer is a first target output, and when the second neural network processes the to-be-processed data, a result of performing kernel function-based transformation on an output of the second neural network layer is a second target output, where a difference between the first target output and the second target output falls within a preset range.

In an optional implementation, the first neural network layer and the second neural network layer are intermediate layers.

In an optional implementation, the first neural network layer includes a first weight; the second neural network layer includes a second weight; and when the to-be-processed data is processed, an input of the first neural network layer is a first input, and an input of the second neural network layer is a second input.

The first target output indicates a distance measure between the first weight mapped to multidimensional feature space and the first input mapped to the multidimensional feature space; and the second target output indicates a distance measure between the second weight mapped to the multidimensional feature space and the second input mapped to the multidimensional feature space.

In an optional implementation, weight distribution of the first neural network is different from weight distribution of the second neural network.

In an optional implementation, the weight distribution of the first neural network is Laplacian distribution, and the weight distribution of the second neural network is Gaussian distribution.

In an optional implementation, the first neural network is an adder neural network ANN, and the second neural network is a convolutional neural network CNN.

An embodiment of this application further provides a computer program product. When the computer program product runs on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program for signal processing. When the program is run on a computer, the computer is enabled to perform the steps performed by the foregoing execution device, or the computer is enabled to perform the steps performed by the foregoing training device.

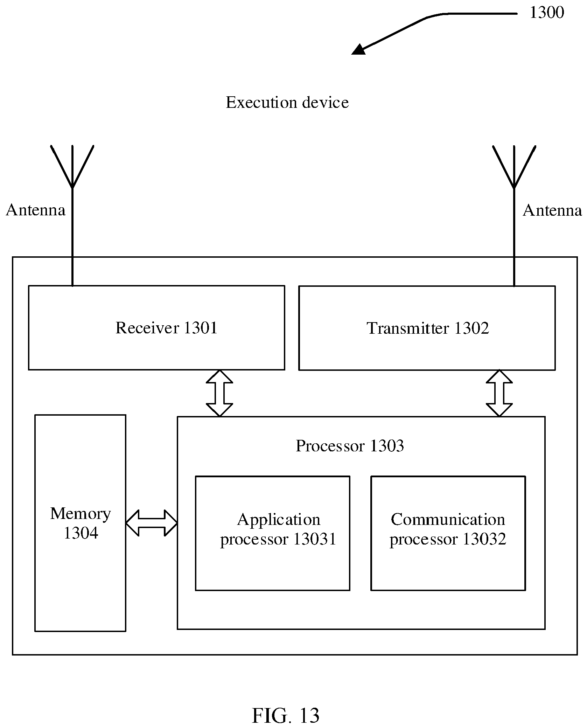

The following describes an execution device provided in an embodiment of this application. FIG. 13 is a schematic diagram of a structure of an execution device according to an embodiment of this application, the execution device 1300 may be specifically represented as a mobile phone, a tablet computer, a notebook computer, an intelligent wearable device, a server, or the like. This is not limited herein. The data processing apparatus described in the embodiment corresponding to FIG. 10 may be deployed on the execution device 1300, and is configured to implement a data processing function in the embodiment corresponding to FIG. 10. Specifically, the execution device 1300 includes a receiver 1301, a transmitter 1302, a processor 1303, and a memory 1304 (there may be one or more processors 1303 in the execution device 1300, and one processor is used as an example in FIG. 13.). The processor 1303 may include an application processor 13031 and a communication processor 13032. In some embodiments of this application, the receiver 1301, the transmitter 1302, the processor 1303, and the memory 1304 may be connected through a bus or in another manner.

The memory 1304 may include a read-only memory and a random access memory, and provide instructions and data for the processor 1303. A part of the memory 1304 may further include a non-volatile random access memory (non-volatile random access memory, NVRAM). The memory 1304 stores a processor and operation instructions, an executable module or a data structure, a subnet thereof, or an extended set thereof. The operation instructions may include various operation instructions to implement various operations.

The processor 1303 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 1303, or may be implemented by using the processor 1303. The processor 1303 may be an integrated circuit chip, and has a signal processing capability. In an implementation process, steps in the foregoing methods may be implemented by using a hardware integrated logical circuit in the processor 1303, or by using instructions in a form of software. The processor 1303 may be a general-purpose processor, a digital signal processor (DSP), a microprocessor, or a microcontroller; or may further include an application-specific integrated circuit (ASIC), a field-programmable gate array (FPGA) or another programmable logic device, a discrete gate or transistor logic device, or a discrete hardware component. The processor 1303 may implement or perform the methods, steps, and logic block diagrams disclosed in embodiments of this application. The general-purpose processor may be a microprocessor, or the processor may be any conventional processor or the like. Steps of the methods disclosed with reference to embodiments of this application may be directly performed by a hardware decoding processor, or may be performed by using a combination of hardware and software modules in the decoding processor. The software module may be located in a mature storage medium in the art, for example, a random access memory, a flash memory, a read-only memory, a programmable read-only memory, an electrically erasable programmable memory, a register, or the like. The storage medium is located in the memory 1304, and the processor 1303 reads information in the memory 1304 and completes the steps in the foregoing methods in combination with hardware in the processor 1303.

The receiver 1301 may be configured to: receive input digital or character information, and generate a signal input related to a related setting and function control of the execution device. The transmitter 1302 may be configured to output digital or character information through a first interface. The transmitter 1302 may be further configured to send instructions to a disk group through the first interface to modify data in the disk group. The transmitter 1302 may further include a display device such as a display.

In this embodiment of this application, in one case, the processor 1303 is configured to perform the data processing method performed by the execution device in the embodiment corresponding to FIG. 7.

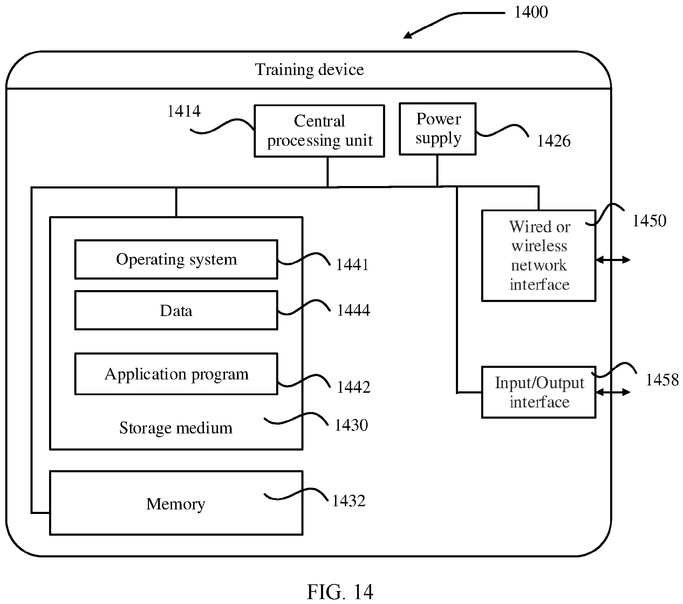

An embodiment of this application further provides a training device. FIG. 14 is a schematic diagram of a structure of a training device according to an embodiment of this application. Specifically, the training device 1400 is implemented by one or more servers. The training device 1400 may have a large difference due to different configurations or performance, and may include one or more central processing units (CPU) 1414 (for example, one or more processors), a memory 1432, and one or more storage media 1430 (for example, one or more massive storage devices) that store an application program 1442 or data 1444. The memory 1432 and the storage medium 1430 may be transient storage or persistent storage. The program stored in the storage medium 1430 may include one or more modules (not shown in the figure), and each module may include a series of instruction operations for the training device. Further, the central processing unit 1414 may be configured to: communicate with the storage medium 1430, and perform, on the training device 1400, the series of instruction operations in the storage medium 1430.

The training device 1400 may further include one or more power supplies 1426, one or more wired or wireless network interfaces 1450, one or more input/output interfaces 1458, or one or more operating systems 1441 such as Windows ServerTM, Mac OS XTM, UnixTM, LinuxTM and FreeBSDTM.

Specifically, the training device may perform the neural network distillation method performed by the execution device in embodiments corresponding to FIG. 5 and FIG. 8.

An embodiment of this application further provides a computer program product. When the computer program product runs on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program for signal processing. When the program is run on a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor, and the communication unit may be, for example, an input/output interface, a pin, a circuit, or the like. The processing unit may execute computer-executable instructions stored in a storage unit. In this way, a chip in the execution device performs the data processing methods described in the foregoing embodiments, or a chip in the training device performs the data processing methods described in the foregoing embodiments. Optionally, the storage unit is a storage unit in the chip, for example, a register or a cache; or the storage unit may be a storage unit that is in a radio access device end and that is located outside the chip, for example, a read-only memory (ROM), another type of static storage device that can store static information and instructions, a random access memory (RAM), or the like.

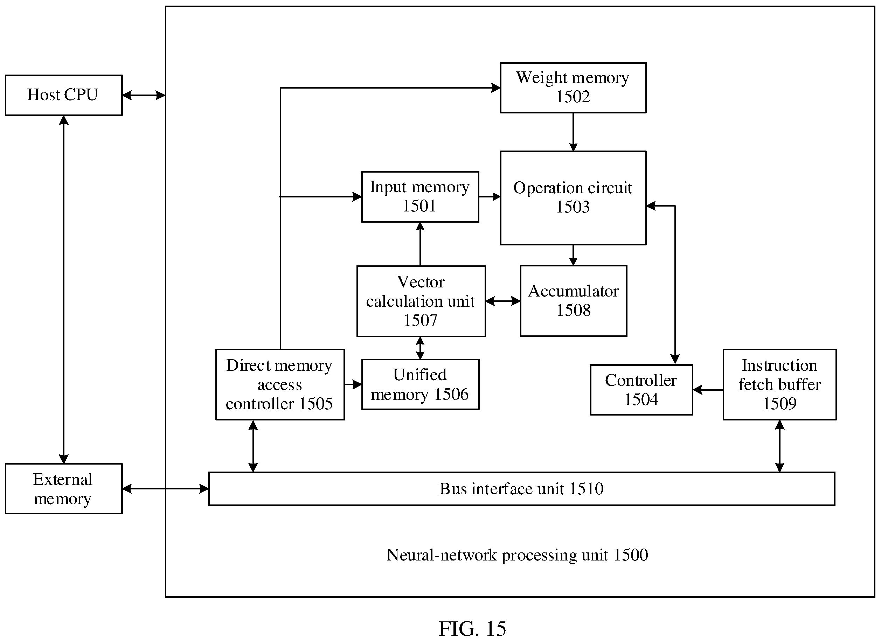

Specifically, FIG. 15 is a schematic diagram of a structure of a chip according to an embodiment of this application. The chip may be represented as a neural-network processing unit NPU 1500. The NPU 1500 is mounted to a host CPU as a coprocessor, and the host CPU allocates a task. A core part of the NPU is an operation circuit 1503, and a controller 1504 controls the operation circuit 1503 to extract matrix data in a memory and perform a multiplication operation.

In some implementations, the operation circuit 1503 internally includes a plurality of processing units (PE). In some implementations, the operation circuit 1503 is a two-dimensional systolic array. Alternatively, the operation circuit 1503 may be a one-dimensional systolic array or another electronic circuit that can perform mathematical operations such as multiplication and addition. In some implementations, the operation circuit 1503 is a general-purpose matrix processor.

For example, it is assumed that there is an input matrix A, a weight matrix B, and an output matrix C. The operation circuit fetches, from a weight memory 1502, data corresponding to the matrix B, and buffers the data in each PE of the operation circuit. The operation circuit fetches data of the matrix A from an input memory 1501 to perform a matrix operation on the matrix B, to obtain a partial result or a final result of the matrix, which is stored in an accumulator (accumulator) 1508.

A unified memory 1506 is configured to store input data and output data. Weight data is directly transferred to the weight memory 1502 by using a direct memory access controller (DMAC) DMAC 1505. The input data is also transferred to the unified memory 1506 by using the DMAC.

BIU is the abbreviation for bus interface unit. A bus interface unit 1510 is configured to perform interaction between an AXI bus, and the DMAC and an instruction fetch buffer (IFB) 1509.

The bus interface unit (BIU) 1510 is configured to obtain instructions from an external memory by the instruction fetch buffer 1509, and is further configured to obtain original data of the input matrix A or the weight matrix B from the external memory by the direct memory access controller 1505.

The DMAC is mainly configured to transfer input data in the external memory DDR to the unified memory 1506, transfer weight data to the weight memory 1502, or transfer input data to the input memory 1501.

A vector calculation unit 1507 includes a plurality of operation processing units. If necessary, further processing, for example, vector multiplication, vector addition, exponential operation, logarithmic operation, and size comparison is performed on an output of the operation circuit 1503. The vector calculation unit 1507 is mainly configured to perform network computing, such as batch normalization, pixel-level summation, and upsampling of a feature plane, on a non-convolutional/fully connected layer of a neural network.

In some implementations, the vector calculation unit 1507 can store a processed output vector in the unified memory 1506. For example, the vector calculation unit 1507 may apply a linear function or a non-linear function to the output of the operation circuit 1503, for example, perform linear interpolation on a feature plane extracted by a convolutional layer, for another example, add value vectors to generate an activation value. In some implementations, the vector calculation unit 1507 generates a normalized value, a pixel-level summation value, or both. In some implementations, the processed output vector can be used as an activation input of the operation circuit 1503, for example, to be used in a subsequent layer of the neural network.

The instruction fetch buffer 1509 connected to the controller 1504 is configured to store instructions used by the controller 1504.

The unified memory 1506, the input memory 1501, the weight memory 1502, and the instruction fetch buffer 1509 are all on-chip memories. The external memory is private for an NPU hardware architecture.

The processor mentioned anywhere above may be a general-purpose central processing unit, a microprocessor, an ASIC, or one or more integrated circuits configured to control program execution.

In addition, it should be noted that the described apparatus embodiments are merely examples. The units described as separate parts may or may not be physically separate, and parts displayed as units may or may not be physical units, and may be located in one position, or may be distributed on a plurality of network units. Some or all the modules may be selected based on an actual requirement to achieve the objectives of the solutions of embodiments. In addition, in the accompanying drawings of the apparatus embodiments provided in this application, connection relationships between the modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or certainly may be implemented by dedicated hardware, including an application-specific integrated circuit, a dedicated CPU, a dedicated memory, a dedicated component, and the like. Generally, any function performed by a computer program can be easily implemented by using corresponding hardware, and a specific hardware structure used to achieve a same function may be of various forms, for example, in a form of an analog circuit, a digital circuit, an application-specific circuit, or the like. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of foregoing embodiments may be implemented by using software, hardware, firmware, or any combination thereof. When the software is used to implement embodiments, all or a part of embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

**Claims**

1. A neural network distillation method, wherein the method comprises:

   obtaining to-be-processed data, a first neural network, and a second neural network, wherein the first neural network comprises a first neural network layer, and the second neural network comprises a second neural network layer;
   processing the to-be-processed data by using the first neural network and the second neural network to obtain a first target output and a second target output, wherein the first target output is obtained by performing kernel function-based transformation on an output of the first neural network layer, and the second target output is obtained by performing kernel function-based transformation on an output of the second neural network layer;
   obtaining a target loss based on the first target output and the second target output; and
   performing knowledge distillation on the first neural network based on at least the target loss and by using the second neural network as a teacher model and the first neural network as a student model to obtain an updated first neural network.

2. The method according to claim 1, wherein the method further comprises:
   obtaining target data, and processing the target data based on the updated first neural network to obtain a processing result.

3. The method according to claim 1 or 2, wherein the first neural network layer and the second neural network layer are intermediate layers.

4. The method according to any one of claims 1 to 3, wherein the target loss is obtained based on a mean square error, relative entropy, a JS (Jensen-Shannon) divergence, or a wasserstein distance of the first target output and the second target output.

5. The method according to any one of claims 1 to 4, wherein the first neural network layer comprises a first weight; the second neural network layer comprises a second weight; and when the to-be-processed data is processed, an input of the first neural network layer is a first input, and an input of the second neural network layer is a second input, wherein
   the first target output indicates a distance measure between the first weight mapped to multidimensional feature space and the first input mapped to the multidimensional feature space; and the second target output indicates a distance measure between the second weight mapped to the multidimensional feature space and the second input mapped to the multidimensional feature space.

6. The method according to any one of claims 1 to 5, wherein weight distribution of the first neural network is different from weight distribution of the second neural network.

7. The method according to any one of claims 1 to 6, wherein the weight distribution of the first neural network is Laplacian distribution, and the weight distribution of the second neural network is Gaussian distribution.

8. The method according to any one of claims 1 to 7, wherein the first neural network is an adder neural network ANN, and the second neural network is a convolutional neural network CNN.

9. The method according to any one of claims 1 to 8, wherein the updated first neural network comprises an updated first neural network layer, and when the second neural network and the updated first neural network process same data, a difference between an output of the updated first neural network layer and the output of the second neural network layer falls within a preset range.

10. The method according to any one of claims 1 to 9, wherein the obtaining a target loss based on the first target output and the second target output comprises:

    performing linear transformation on the first target output to obtain a linearly transformed first target output;
    performing linear transformation on the second target output to obtain a linearly transformed second target output; and
    obtaining the target loss based on the linearly transformed first target output and the linearly transformed second target output.

11. The method according to any one of claims 1 to 10, wherein a kernel function comprises at least one of the following: a radial basis kernel function, a Laplacian kernel function, a power index kernel function, an ANOVA kernel function, a rational quadratic kernel function, a multiquadric kernel function, an inverse multiquadric kernel function, a sigmoid kernel function, a polynomial kernel function, and a linear kernel function.

12. A neural network distillation method, wherein the method is applied to a terminal device, and the method comprises:

obtaining a first neural network and a second neural network;
performing knowledge distillation on the first neural network by using the second neural network as a teacher model and the first neural network as a student model to obtain an updated first neural network;
training the second neural network to obtain an updated second neural network; and
performing knowledge distillation on the updated first neural network by using the updated second neural network as the teacher model and the updated first neural network as the student model to obtain a third neural network.

13. The method according to claim 12, wherein the training the second neural network to obtain an updated second neural network comprises:
iteratively training the second neural network for a plurality of times to obtain the updated second neural network.

14. A data processing method, wherein the method comprises:

obtaining to-be-processed data and a first neural network, wherein the first neural network is obtained through knowledge distillation by using a second neural network as a teacher model, the first neural network comprises a first neural network layer, and the first neural network comprises a second neural network layer; and
processing the to-be-processed data by using the first neural network to obtain a processing result, wherein when the to-be-processed data is processed, a result of performing kernel function-based transformation on an output of the first neural network layer is a first target output, and when the second neural network processes the to-be-processed data, a result of performing kernel function-based transformation on an output of the second neural network layer is a second target output, wherein a difference between the first target output and the second target output falls within a preset range.

15. The method according to claim 14, wherein the first neural network layer and the second neural network layer are intermediate layers.

16. The method according to claim 14 or 15, wherein the first neural network layer comprises a first weight; the second neural network layer comprises a second weight; and when the to-be-processed data is processed, an input of the first neural network layer is a first input, and an input of the second neural network layer is a second input, wherein the first target output indicates a distance measure between the first weight mapped to multidimensional feature space and the first input mapped to the multidimensional feature space; and the second target output indicates a distance measure between the second weight mapped to the multidimensional feature space and the second input mapped to the multidimensional feature space.

17. The method according to any one of claims 14 to 16, wherein weight distribution of the first neural network is different from weight distribution of the second neural network.

18. The method according to any one of claims 14 to 17, wherein the weight distribution of the first neural network is Laplacian distribution, and the weight distribution of the second neural network is Gaussian distribution.

19. The method according to any one of claims 14 to 18, wherein the first neural network is an adder neural network ANN, and the second neural network is a convolutional neural network CNN.

20. A neural network distillation apparatus, wherein the apparatus comprises a memory and a processor, wherein the memory stores code, and the processor is configured to: obtain the code, and perform the method according to any one of claims 1 to 11.

21. A neural network distillation apparatus, wherein the apparatus comprises a memory and a processor, wherein the memory stores code, and the processor is configured to: obtain the code, and perform the method according to any one of claim 12 or 13.

22. A data processing apparatus, wherein the apparatus comprises a memory and a processor, wherein the memory stores code, and the processor is configured to: obtain the code, and perform the method according to any one of claims 14 to 16.

23. A computer storage medium, wherein the computer storage medium stores one or more instructions, and when executed by one or more computers, the instructions enable the one or more computers to implement the method according to any one of claims 1 to 11.

24. A computer storage medium, wherein the computer storage medium stores one or more instructions, and when executed by one or more computers, the instructions enable the one or more computers to implement the method according to any one of claim 12 or 13.

25. A computer storage medium, wherein the computer storage medium stores one or more instructions, and when executed by one or more computers, the instructions enable the one or more computers to implement the method according to any one of claims 14 to 19.

IT value chain

Intelligent information chain

Intelligent product and industry application

Translation/Text analysis/...

Voice/Visual/Image/...

Data processing:

Data training/Machine learning/Deep learning

Search/Inference/Decision-making

...

Data

Infrastructure

Sensor

Intelligent chip

Base platform

...

FIG. 1

Data collection
device 160

System architecture 100

Data flow

Database
130

Training device
120

Data
flow

Execution device 110

Client
device
140

Input
data

I/O interface 112

Target model/rule 101

Computation module 111

Data storage
system 150

Output
a result

Preprocessing module 113

Preprocessing module 114

FIG. 2

Classification result of the
to-be-processed image

Neural
network
layer 230

Output layer 240

Hidden layer n (23n)

Hidden layer 2 (232)

Hidden layer 1 (231)

Convolutional
layer/Pooling
layer
220

226

225

224

223

222

221

Convolutional
neural network
(CNN)
200

Input layer 210

To-be-processed
image

FIG. 3

EP 4 163 831 A1

FIG. 4

Obtain to-be-processed data, a first neural network, and a second neural network, where the first neural network includes a first neural network layer, and the second neural network includes a second neural network layer — 501

Process the to-be-processed data separately by using the first neural network and the second neural network to obtain a first target output and a second target output, where the first target output is obtained by performing kernel function–based transformation on an output of the first neural network layer, and the second target output is obtained by performing kernel function–based transformation on an output of the second neural network layer — 502

Obtain a target loss based on the first target output and the second target output — 503

Perform knowledge distillation on the first neural network based on at least the target loss and by using the second neural network as a teacher model and the first neural network as a student model to obtain an updated first neural network — 504

FIG. 5

First neural network

Second neural network

$g(X1,F1)$

$1 \times 1\ conv$

$L_{mid_1}$

$g(x_a^3,f_a^3)$

$L_{mid_2}$

$L_{mid_3}$

$L_{blend}$

$1 \times 1\ conv$

$h(X2,F2)$

CE Loss

FIG. 6

Obtain to-be-processed data and a first neural network, where the first neural network is obtained through knowledge distillation by using a second neural network as a teacher model, the first neural network includes a first neural network layer, and the first neural network includes a second neural network layer

701

Process the to-be-processed data by using the first neural network to obtain a processing result, where when the to-be-processed data is processed, a result of performing kernel function-based transformation on an output of the first neural network layer is a first target output, and when the second neural network processes the to-be-processed data, a result of performing kernel function-based transformation on an output of the second neural network layer is a second target output, where a difference between the first target output and the second target output falls within a preset range

702

FIG. 7

Obtain a first neural network and a second neural network

801

Perform knowledge distillation on the first neural network by using the second neural network as a teacher model and the first neural network as a student model to obtain an updated first neural network

802

Train the second neural network to obtain an updated second neural network

803

Perform knowledge distillation on the updated first neural network by using the updated second neural network as the teacher model and the updated first neural network as the student model to obtain a third neural network

804

FIG. 8

| First neural network | | Second neural network |
|---|---|---|

Knowledge distillation

| Updated first neural network | | Second neural network |
|---|---|---|

Training

| Updated first neural network | | Updated second neural network |
|---|---|---|

Knowledge distillation

| Third neural network | | Updated second neural network |
|---|---|---|

FIG. 9

1000

1001

Obtaining module

1002

Data processing module

1003

Knowledge distillation module

FIG. 10

FIG. 11

FIG. 12

1300

Execution device

Antenna                                    Antenna

| Receiver 1301 | Transmitter 1302 |

Processor 1303

| Memory 1304 | Application processor 13031 | Communication processor 13032 |

FIG. 13

1400

Training device

1414     Central processing unit    Power supply    1426

Operating system    1441

Data    1444

Application program    1442

Storage medium    1430

Memory    1432

Wired or wireless network interface    1450

Input/Output interface    1458

FIG. 14

EP 4 163 831 A1

FIG. 15

| | INTERNATIONAL SEARCH REPORT | International application No. |
|---|---|---|
| | | **PCT/CN2021/102001** |

**A.  CLASSIFICATION OF SUBJECT MATTER**

G06N 3/04(2006.01)i;  G06N 3/08(2006.01)i

According to International Patent Classification (IPC) or to both national classification and IPC

**B.  FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI; USTXT; WOTXT; EPTXT: 神经网络, 蒸馏, 迁移, 教师, 老师, 学生, 中间层, 核函数, 更新, 训练, 维度, 高维, neural network, distillation, transfer, teacher, student, middle, kernel function, update, train, dimension

**C.  DOCUMENTS CONSIDERED TO BE RELEVANT**

| Category* | Citation of document, with indication, where appropriate, of the relevant passages | Relevant to claim No. |
|---|---|---|
| PX | CN 111882031 A (HUAWEI TECHNOLOGIES CO., LTD.) 03 November 2020 (2020-11-03) claims 1-25, description, paragraphs [0140]-[0335] | 1-25 |
| X | CN 111126599 A (FUDAN UNIVERSITY) 08 May 2020 (2020-05-08) claims 1-4, description, paragraphs [0020]-[0032] | 1-4, 6-11, 14, 15, 17-20, 22, 23, 25 |
| A | CN 111126599 A (FUDAN UNIVERSITY) 08 May 2020 (2020-05-08) claims 1-4, description, paragraphs [0020]-[0032] | 5, 12, 13, 16, 21, 24 |
| X | CN 107247989 A (BEIJING TUSIMPLE FUTURE TECHNOLOGY CO., LTD.) 13 October 2017 (2017-10-13) description, paragraphs [0038]-[0069] | 1-4, 6-11, 14, 15, 17-20, 22, 23, 25 |
| A | CN 107247989 A (BEIJING TUSIMPLE FUTURE TECHNOLOGY CO., LTD.) 13 October 2017 (2017-10-13) description, paragraphs [0038]-[0069] | 5, 12, 13, 16, 21, 24 |
| A | CN 111160409 A (ZHEJIANG UNIVERSITY) 15 May 2020 (2020-05-15) entire document | 1-25 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 August 2021** | **30 August 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/102001**

| Patent document cited in search report | | | Publication date (day/month/year) | Patent family member(s) | | | Publication date (day/month/year) |
|---|---|---|---|---|---|---|---|
| CN | 111882031 | A | 03 November 2020 | None | | | |
| CN | 111126599 | A | 08 May 2020 | None | | | |
| CN | 107247989 | A | 13 October 2017 | US | 2018365564 | A1 | 20 December 2018 |
| | | | | CN | 107247989 | B | 24 November 2020 |
| CN | 111160409 | A | 15 May 2020 | None | | | |

Form PCT/ISA/210 (patent family annex) (January 2015)

**EP 4 163 831 A1**

## REFERENCES CITED IN THE DESCRIPTION

**Patent documents cited in the description**

- CN 202010615537